# EUROPEAN PATENT APPLICATION

(11) **EP 3 355 640 A1**
(43) Date of publication of application: **01.08.2018**
(21) Application number: 17190183.8
(22) Date of filing: 08.09.2017
(51) Int. Cl.: H04W 72/04, H04W 74/08, H04W 84/12, H04B 7/0452

(54) **WIRELESS COMMUNICATION DEVICE AND WIRELESS COMMUNICATION METHOD**

(30) Priority: 30.01.2017 JP 2017014715
(71) Applicant: Kabushiki Kaisha Toshiba, Minato-ku, Tokyo (JP)
(72) Inventor: MATSUO, Ryoko, Minato-ku, Tokyo (JP)
(74) Representative: Noble, Nicholas

(57) **Abstract**

According to one embodiment, a wireless communication device includes a receiver, controlling circuitry and a transmitter. The receiver is configured to receive a first request from at least a part of a plurality of first wireless communication devices. The controlling circuitry is configured to select two or more first wireless communication devices from the first wireless communication devices each transmitting the first request. The transmitter is configured to transmit a first frame to instruct the selected first wireless communication devices to perform multiplexing transmission.

## Description

### FIELD

Approach of the present invention described herein relate to a wireless communication device and a wireless communication method.

### BACKGROUND

In multiuser transmission, multiplexed terminals are determined by scheduling. The method of this scheduling has an effect on system characteristics. The terminal may be selected generally by a scheme for selecting at random or in round-robin fashion, or a scheme for selecting depending on a communication channel quality. Alternatively, there has been considered a scheme in which, taking into account these both schemes, terminals are classified into groups for one of which a communication channel quality is important and for the other of which it is not important, and the scheduling is performed for each of the groups.

On the other hand, an extended mechanism of EDCA (Enhanced Distributed Channel Access) for video packets has been proposed. In this mechanism, different transmission priorities are set to a real time image and other images on the basis of importance information.

The multiuser transmission has been considered to be applied to a base station and terminals for vehicle installation. As a candidate technology used for this case, OFDMA is expected to be utilized. For example, data from sensors equipped in a plurality of terminals may be collected by utilizing OFDMA. In the case where data temporally synchronized is desired to be transmitted and the like, particular terminals of a plurality of terminals are required to simultaneously uplink-transmit the data. In order to do this, the base station must be able to properly determine which terminals are to uplink-transmit the data. In the above scheduling method, since the terminal is selected at random or depending on the communication channel quality, the terminals to simultaneously uplink-transmit the data cannot be determined. For the reason why the above mechanism utilizing the EDCA controls the transmission of the packet depending on the priority, the terminals to simultaneously uplink-transmit cannot be determined.

### BRIEF DESCRIPTION OF THE DRAWINGS

FIG. 1 is a diagram showing an exemplary configuration of a wireless communication system in a first approach;
FIGS. 2A and 2B are each a diagram showing an exemplary basic format of a MAC frame;
FIG. 3 is a diagram showing an exemplary format of an information element;
FIG. 4 is a functional block diagram of an access point in a first approach;
FIG. 5 shows an exemplary table in the first approach;
FIG. 6 is a functional block diagram of a terminal in the first approach;
FIG. 7 is a sequence diagram of the wireless communication system in FIG. 1;
FIG. 8 is a flowchart of an example of an operation of the access point;
FIG. 9 is a diagram showing an example of enlarging a contention window;
FIG. 10 is a diagram showing an operation sequence in a third approach;
FIG. 11 is a functional block diagram of a base station or terminal in a fourth approach;
FIG. 12 is a diagram showing an exemplary entire configuration of a terminal or base station;
FIG. 13 is an exemplary hardware configuration showing a wireless communication device equipped in a terminal or base station;
FIG. 14 is a functional block diagram of a terminal or base station in a sixth approach;
FIGS. 15A and 15B are each a perspective view of a wireless communication terminal in approach of the present invention;
FIG. 16 is a diagram showing a memory card in approach of the present invention; and
FIG. 17 is a diagram showing an example of frame exchange during a contention period.

### DETAILED DESCRIPTION

According to one embodiment, a wireless communication device includes a receiver, controlling circuitry and a transmitter. The receiver is configured to receive a first request from at least a part of a plurality of first wireless communication devices. The controller is configured to select two or more first wireless communication devices from the first wireless communication devices each transmitting the first request. The transmitter is configured to transmit a first frame to instruct the selected first wireless communication devices to perform multiplexing transmission.

Hereinafter, a description is given of an embodiment of the present invention with reference to the drawings.

### (First Embodiment)

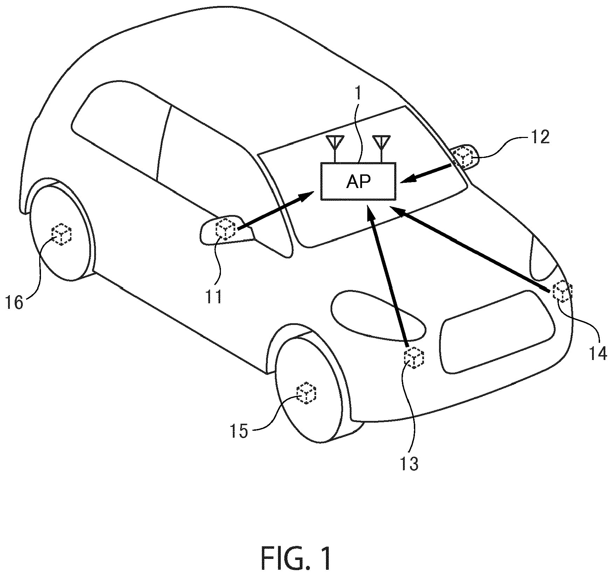

FIG. 1 shows an overall configuration of a wireless communication system according to a first embodiment. The system in FIG. 1 is a wireless communication system for being vehicle-mounted and FIG. 1 shows an example of arranging the system in a car. In the figure, the system is equipped in a standard-sized four-wheel automobile as an example, but may be equipped in a motorcycle, a bus or the like. What the system is equipped in is not limited to the vehicles, and may be in other mobile objects such as an aircraft, a boat or ship, a carrier apparatus in a factory, and a robot.

The system includes an access point (AP) 1 as a base station, and wireless communication terminals each as a station (STA) (hereinafter, referred to as terminals) 11, 12, 13, 14, 15, and 16. In the figure, the number of the terminals is six, but may be more or less than six. The number of the APs may be more than one.

Each of the AP 1 and terminals 11 to 16 operates with a battery equipped in the car or a battery equipped in itself, or both of them. For example, a user starting up an engine, power supply from the car battery to the AP 1 and the terminals 11 to 16 is started to enable them to operate. If the AP 1 and the terminals 11 to 16 are provided with the batteries, the power supplied from the car battery may be charged to their batteries. The AP 1 and the terminals 11 to 16 are connected to the car battery via an electrical wiring in the car, for example.

The AP 1 is embedded in an arbitrary place in the car, such as in a dashboard on an inside front of the car. The AP 1 includes a wireless communication device complying with the next generation wireless LAN (Local Area Network) standard, IEEE802.11ax standard. The wireless communication device in the AP 1 performs wireless LAN communication with wireless communication devices equipped in the terminals 11 to 16. The AP 1 can perform uplink user multiplex communication, as the wireless LAN communication, with a part or all of the terminals selected from the terminals 11 to 16. Examples of the uplink user multiplex communication include Uplink Orthogonal Frequency Division Multiple Access (UL-OFDMA), and Uplink Multi-User MIMO (hereinafter, referred to as UL-MU-MIMO). The user multiplex communication scheme is not limited to these. A wireless communication device complying with other standards than IEEE802.11ax standard may be used.

OFDMA is a communication scheme with which a resource unit including one or more subcarriers is used as a minimum unit of communication resource (frequency component) to simultaneously perform transmissions to a plurality of terminals or receptions from a plurality of terminals. The simultaneous transmissions from the access point to a plurality of terminals correspond to DL-OFDMA, and the simultaneous transmissions from a plurality of terminals to the access point correspond to UL-OFDMA. The resource unit may be also referred to as a subchannel, a resource block, a frequency block or the like. The resource unit corresponds to a communication resource for each terminal used for OFDMA.

UL-MU-MIMO is a communication scheme with which a plurality of terminals transmit frames by spatial multiplexing at the same timing and at the same frequency band. The terminals each transmit a packet containing a frame a head of which a physical header is added to, the physical headers including preamble patterns orthogonal to each other. The AP simultaneously receives the packets from these terminals and uses the preamble patterns of the physical headers of the packets to compute a channel response for each terminal. The AP uses the computed channel responses to separate these frames for each terminal. The preamble pattern is different between the terminals and the preamble pattern for each terminal corresponds to the communication resource for each terminal used for the spatial multiplexing transmission.

The AP1 includes one or more antennas. In this example, the AP 1 includes antennas 1A and 1B. If the AP 1 includes a plurality of antennas, it may use a beam which is a radio wave having directivity to communicate with the terminal. If the antenna itself has a directivity switchable configuration, its directivity may be controlled by adjusting setting of the antenna. A frequency band used for a wireless LAN may be 2.4 GHz band, 5 GHz band, or other bands.

The terminals 11 to 16 each include a wireless communication device performing the wireless LAN communication with the AP 1. The wireless communication device in each of the terminals 11 to 16 performs communication complying with IEEE802.11ax standard and includes a sensor. Examples of the sensor include a camera (image sensor), a tire pressure sensor, an engine temperature sensor, a LIDAR (Light Detection And Ranging) device, an acceleration sensor and the like. However, the sensor is not limited to these examples. The terminals 11 to 16 each include one or more antennas. The terminals 11 to 16 each transmit data acquired by the sensor to the AP 1. The terminals 11 to 16 are located at positions depending on purposes of data collection.

In the example in FIG. 1, the terminal 11 is embedded in a right sideview mirror, and the terminal 12 is embedded in a left sideview mirror. The terminals 11 and 12 are each equipped with a camera as a sensor, and the cameras in the terminals 11 and 12 acquire images of a right rearward side and left rearward side, respectively to transmit the acquired image data to the AP 1.

The terminal 13 is embedded in a right side portion of a front bumper, and the terminal 14 is embedded in a left side portion of the front bumper. The terminals 13 and 14 are each equipped with a camera, and respectively acquire images of views ahead to transmit acquired image data to the AP 1.

The terminal 15 is mounted to a wheel of a right front tire, and the terminal 16 is mounted to a wheel of a right rear tire. The terminal may be mounted also to wheels of left front and left rear tires. The terminals 15 and 16 each include a tire pneumatic sensor to measure a pneumatic pressure of the each tire and transmit the measured data to the AP 1.

The AP 1 uses the data acquired from the terminals to perform various processes. For example, the images from a plurality of cameras may be used to perform an image recognition process (in which an object such as a person, hand, face, leg, vehicle or the like and a motion thereof are detected to output a detection result, and so on) to be utilized for automated driving control or the like. In this case, besides the result of the image recognition process, data from the acceleration sensor, a GPS system and the like may be utilized. The image may be used not only for the purpose of the image recognition process but also for displaying an image of a landscape or the like on a display panel (e.g., car navigation system screen) for entertainment. The process described here is merely an example, and what process is performed by use of the data acquired from the terminals is not limited to a specific issue.

The AP 1 and the terminals 11 to 16 transmit and receive MAC frames (hereinafter, referred to as frames) in compliance with IEEE802.11 standard. More specifically, the packets are transmitted and received each of which has the physical header added to the frame.

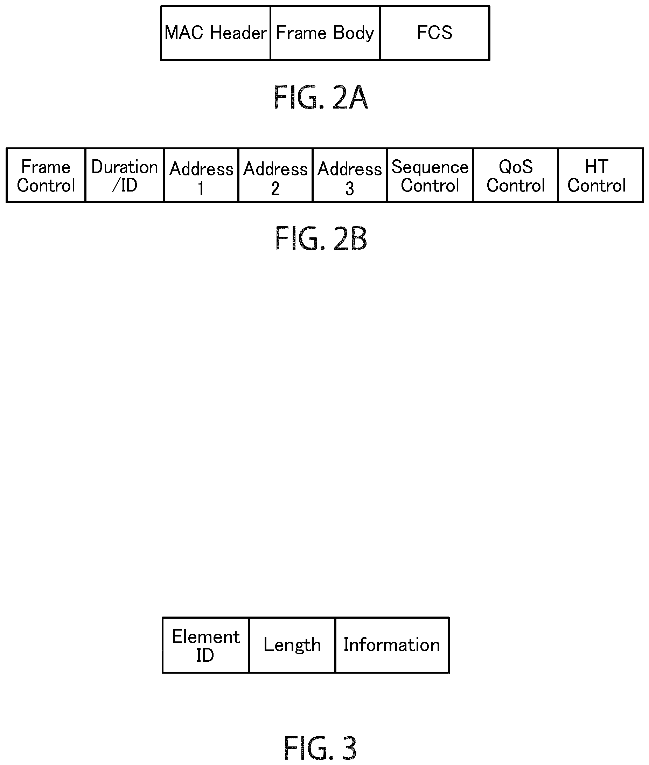

FIG. 2A shows an exemplary basic format of the MAC frame according to the present embodiment. The frame is roughly classified into a data frame, a management frame, and a control frame, and a frame of any classification is based on such a frame format. This frame format contains fields of a MAC header, a Frame body, and an FCS. The MAC header contains fields of a Frame Control, a Duration/ID, an Address 1, an Address 2, an Address 3, a Sequence Control, a QoS Control, and an HT (High Throughput) control as shown in FIG. 2B.

These fields do not need to always exist and there may be cases where some of these fields do not exist. The field of Address 3 may not exist in some cases. Also, there may be other cases where both or either one of the QoS Control field and the HT Control field does not exist. Also, there may be still other cases where the frame body field does not exist. On the other hand, any field or fields that are not illustrated in FIGS. 2A and 2B may exist. For example, an Address 4 field may further exist. The HT Control field may be extended to a VHT (Very High Throughput) Control field defined by IEEE802.11ac, or a HE (High Efficiency) Control field defined by IEEE802.11ax that is the next generation wireless LAN standard.

The field of Address 1 indicates Receiver Address (RA), the field of Address 2 indicates Transmitter Address (TA), and the field of Address 3 indicates either BSSID (Basic Service Set IDentifier) (which may be the wildcard BSSID whose bits are all set to 1 to cover all of the BSSIDs depending on the cases) which is the identifier of the BSS (Basic Service Set), or TA, depending on the purpose of the frame.

Two fields of Type and Subtype or the like are set in the Frame Control field. The rough classification as to whether it is the data frame, the management frame, or the control frame is made by the Type field, and more specific types, for example, fine discrimination among the roughly classified frames, for example, as to whether it is a BA (Block Ack) frame or a BAR (Block Ack Request) frame within the control frame is made by the Subtype field.

The Duration/ID field describes the medium reserve time, and it is determined that the medium is virtually in the busy state from the end of the physical packet containing this MAC frame to the medium reserve time when a MAC frame addressed to another terminal is received. The scheme of this type to virtually determine that the medium is in the busy state, or the period during which the medium is virtually regarded as being in the busy state, is, as described above, called NAV (Network Allocation Vector).

The QoS control field is used to carry out QoS control to carry out transmission with the priorities of the frames taken into account. The QoS control field includes a TID field (16 types from 0 to 15) in which an identifier is set for data traffic, and an Ack policy field in which an acknowledgement scheme is set. Confirmation of the TID field enables the traffic type of the data to be identified. Moreover, confirmation of the Ack policy field can determine whether the QoS Data frame is a "normal Ack policy" or a "block Ack policy" or whether the data frame has been transmitted as "No Ack policy."

The HT control filed is a filed introduced in IEEE802.11n. The HT control field is present when an Order field is set to 1 for QoS data frame or a management frame. As described above, the HT control field can be extended to the VHT (Very High Throughput) control field in IEEE802.11ac or the HE (High Efficient) control field in IEEE802.11ax which is the next-generation wireless LAN standard and can provide notifications corresponding to the functions of IEEE802.11n, IEEE802.11ac, or IEEE802.11ax.

In the management frame, an information element (Information element; IE) to which a unique Element ID (IDentifier) is assigned is set in the Frame Body field. One or a plurality of information elements may be set in the Frame Body field. FIG. 3 shows a format of the information element. The information element has the fields of an Element ID field, Length field, an Information field. The information element is discriminated by the Element ID. The Information field is adapted to store the content of the information to be notified, and the Length field is adapted to store the length information of the information field. In the management frame, predetermined one or more fields may be arranged depending on the frame type (Subtype) other than the information element.

Frame check sequence (FCS) information is set in the FCS field as a checksum code for use in error detection of the frame on the reception side. As an example of the FCS information, CRC (Cyclic Redundancy Code) may be mentioned.

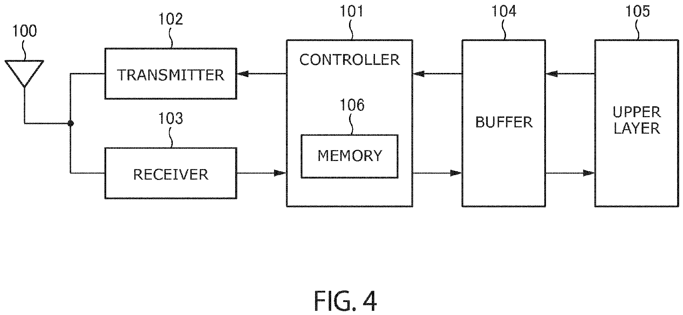

FIG. 4 is a functional block diagram of the AP 1 according to the present embodiment. The AP 1 includes an antenna 100, a controller (or controlling circuitry) 101, a transmitter 102, a receiver 103, a buffer 104, and an upper layer 105. The controller 101 includes a memory 106. The number of the antennas is one although the number may be one or more. The controller 101 corresponds to a controlling circuitry or baseband integrated circuitry which controls communication with the terminals. The transmitter 102 and the receiver 103 form a wireless communicator or RF integrated circuitry which transmits and receives the MAC frames (hereinafter, merely referred to as frames) via the antenna 100. A process of the controller 101, and all or a part of a digital domain process of the transmitter 102 and the receiver 103 may be performed by software (program) executing on a processor such as a CPU, or may be performed by hardware, or may be performed by the both of software and hardware. The AP 1 may include a processor performing the process of the controller 101, all or a part of the transmitter 102 and the receiver 103.

The buffer 104 is a storage for transferring data or frame between the upper layer 105 and the controller 101. The buffer 104 may be a volatile memory such as a DRAM or a non-volatile memory such as a NAND, or an MRAM. The upper layer 105 may perform an upper communication process than a MAC layer such as TCP/IP or UDP/IP. Alternatively, TCP/IP or UDP/IP may be performed in the controller 101 and the upper layer 105 may also perform a process of an application layer of processing the data upper than TCP/IP or UDP/IP. An operation of the upper layer 105 may be performed by software (program) processing by a processor such as a CPU, or may be performed by hardware, or may be performed by the both of the software and the hardware.

The controller 101 mainly performs a process of the MAC layer, a part of a process of a physical layer (e.g., a process concerning multiuser transmission such as UL-OFDMA or UL-MU-MIMO or the like). The controller 101 transmits and receives the frame via the transmitter 102 and the receiver 103 to control the communication with the terminals. The controller 101 holds information on the terminals and information required for communicating with the terminals in the memory 106 or an accessible external memory. The frame is transmitted in accordance with CSMA/CA. In other words, carrier sense is performed before transmission, and if an access right with respect to a wireless medium is acquired, the frame is transmitted.

Specifically, the carrier sense is performed during a standby time that is a sum of a fixed time and a backoff time determined at random, and if a state of the wireless medium is determined to be idle, the access right is acquired. As the fixed time, a DIFS (distributed coordination function interframe space) or an AIFS (arbitration interframe space) can be adopted, for example. The carrier sense during the backoff time is called backoff.

The backoff time is acquired by multiplying a slot time by a pseudorandom integer led from uniform distribution between contention windows (CW) given by integers from 0. Here, the CW multiplied by the slot time is referred to as "CW time width". An initial value of the CW is given by CWmin, and a value of the CW is increased up to CWmax every retransmission.

The controller 101 may also control so as to periodically transmit a beacon frame for notifying attribute information and synchronization information etc. on BSS (Basic Service Set) of the access point. The beacon frame may be configured to contain information on whether the AP 1 is compliant with UL-OFDMA or information on whether the AP 1 is compliant with UL-MU-MIMO, or both of them. The AP 1 may notify these pieces of information on whether to be compliant by means of other frame than the beacon frame.

The controller 101 may include a clock generator generating a clock to manage an internal time using the clock generated by the clock generator. The controller 101 may output externally the clock created by the clock generator. Alternatively, the controller 101 may receive a clock generated by an external clock generator to manage an internal time using the relevant clock generated.

The controller 101, on receiving an association request frame from the terminal, starts an association process, and then, transmits an association response frame for authorizing the terminal to connect with itself to establish the wireless link with the relevant terminal. In the association process, required information on capability or attribute etc. (which may include capability information on whether to be compliant with UL-OFDMA or UL-MU-MIMO) are exchanged with each other. In a case where the controller 101 authorizes the terminal to connect therewith, it allocates a number which is generated locally in the relevant network (BSS) to the terminal. The number is called an AID. As the AID, a certain number in a specified range equal to or larger than 1 is allocated, for example. The AID is unique in the network (BSS). The controller 101 stores information associating the AID with the MAC address in the memory 106 or an accessible external memory. The controller 101 may perform an authentication process with the terminal before the association process to authenticate validity of the terminal. The controller 101 periodically checks the buffer 104 to confirm the state of the buffer 104. Alternatively, the controller 101 confirms the state of the buffer 104 according to a trigger given from an external device such as the buffer 104.

The transmitter 102 subjects the input frames to desired processes of the physical layer such as a coding and modulation process or adding the physical header to generate a physical packet. The transmitter 102 subjects the physical packet to DA conversion, a filtering process to extract components of a desired band, frequency conversion (up-conversion) and the like to amplify signals obtained through these processes by a pre-amplifier and radiate the amplified signals as radio waves from the antenna 100. If a plurality of antennas are provided, the directivity for transmission can be also controlled.

The signal received by the antenna 100 is processed in the receiver 103. The received signal of the antenna 100 is amplified by a low noise amplifier (LNA), is subjected to frequency conversion (down-convert), and is subjected to a filtering process, thereby allowing a desired band component to be extracted. The extracted signal is further converted into digital signals through AD conversion and subjected to the processes of the physical layer such as demodulation, error-correcting decode, and the process of the physical header, and thereafter, the frame is input to the controller 101.

The controller 101 carries out CRC check of the frame received from terminal frame. In a case of an aggregation frame in which a plurality of subframes (MPDUs) are aggregated, the CRC check is carried out for the subframes in the aggregation frame. In IEEE802.11 standard, the subframe corresponds to an MPDU (medium access control (MAC) protocol data unit), and the aggregation frame corresponds to an A (Aggregated)-MPDU.

The controller 101 generates an acknowledgement frame depending on a result of the CRC check, and transmits an acknowledgement response frame via the transmitter 102 after elapse of a predetermined time period from completion of receiving the frame. Examples of the acknowledgement response frame include an ACK frame or a BA (Block Ack frame). The BA frame is used for the response when the aggregation frame is received.

If the controller 101 receives the data frame from the terminal, it supplies data contained in a Frame Body field of the data frame to the upper layer 105.

If the upper layer 105 receives a simultaneous transmission request from the terminal and characteristic information of the sensor equipped in the terminal (hereinafter, referred to as sensor characteristic information), it supplies these pieces of information via the buffer 104 to the controller 101. If the upper layer 105 grasps in advance the sensor characteristic of the terminal from attribute information of the terminal (e.g., IP address), the sensor characteristic information of the terminal may be supplied to the controller 101 without receiving the sensor characteristic information from the relevant terminal.

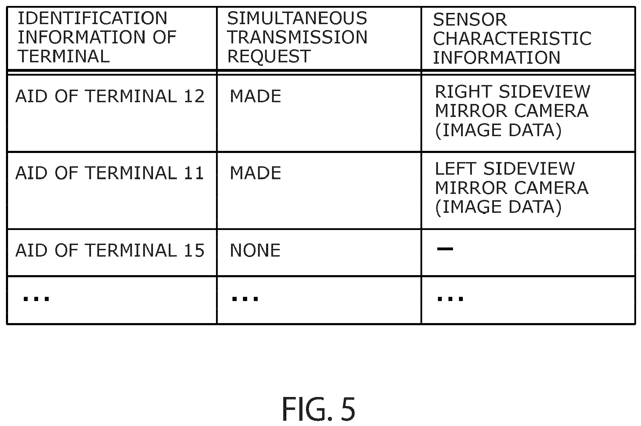

The controller 101 manages, for each of the terminals belonging to the BSS of itself, whether or not the simultaneous transmission request has been made, the sensor characteristic information, and identification information of the terminal in a state where these are associated with each other. The management is carried out using a table, for example. FIG. 5 shows an example of the table. In the table, the identification information of the terminal connected with the AP 1 is stored. If the simultaneous transmission request and the sensor characteristic information are received from the upper layer 105, a value representing "Made" for the simultaneous transmission request and a value of the sensor characteristic information are associated with the identification information of the terminal and stored in the table. As the identification information of the terminal, the MAC address, the AID, or a part of the AID may be used. As for the terminal not transmitting the simultaneous transmission request and the sensor characteristic information, the controller 101 sets a value representing "None" for the simultaneous transmission request and information representing that the sensor characteristic information is not obtained in the table. In the example in FIG. 5, the simultaneous transmission requests and the sensor characteristic information are received from the terminals 11 and 12, but no simultaneous transmission request and no sensor characteristic information are received from the terminal 15 and the like.

Here, the simultaneous transmission request is a request that the terminal performs the multiuser transmission (UL-OFDMA or the like) at the same time as another terminal which transmits the simultaneous transmission request. The sensor characteristic information represents a sensor type or a type of data acquired by the sensor, for example. The sensor characteristic information may include information on the purpose of the data acquired by the sensor. The sensor characteristic information may include information on a position and direction in which the sensor is mounted. The sensor characteristic information may be combination of the examples described here. For example, the sensor characteristic information of the terminal 12 may represent that the sensor in the terminal 12 is the camera mounted on the left sideview mirror. The sensor characteristic information is used to select the terminals to simultaneously perform the multiuser transmission from among the terminals transmitting the simultaneous transmission requests.

In the example in FIG. 5, an entry is generated for every terminal connecting with the AP 1, but the entry may be generated only for the terminal transmitting at least one of the simultaneous transmission request and the sensor characteristic information.

The controller 101 schedules the multiuser transmission (here, UL-OFDMA) at an arbitrary timing or a predetermined timing. In scheduling, the terminals simultaneously performing UL-OFDMA are grouped, for example. In this case, as for a plurality of terminals transmitting the simultaneous transmission requests, identified from among these terminals are terminals to be classified into the same group on the basis of the sensor characteristic information transmitted by the respective terminals, and the identified terminals are classified into the same group.

For example, selected are only the terminals of which the sensor characteristic information has a predetermined relationship as those to perform the simultaneous transmission. Examples of the predetermined relationship include a case where the sensor types are the same (e.g., camera) and a case where the data types detected by the sensors are the same. As another example, a case is included where the positons that the sensors are installed have a predetermined relationship. Alternatively, a case is included where the purposes of use of the obtained data are the same. Combination of these may be included.

As a specific example, two terminals respectively equipped with the camera embedded in the right sideview mirror and the camera embedded in the left sideview mirror (like in the case of the terminals 11 and 12 in FIG. 1) may be defined to satisfy a predetermined relationship. For example, in a case where the images from these are used to perform the image recognition process (in which an object such as a person, hand, face, leg, vehicle or the like and a motion thereof are detected to output a detection result, and so on), pieces of data temporally synchronized are required to be received in real time. For this reason, these terminals 11 and 12 are classified into the same group and made to simultaneously perform UL-OFDMA to allow the temporally synchronized images to be received from these terminals in real time. Here, the data defining a predetermined relationship may be stored in the memory 106 such that the controller 101 can determine whether or not a predetermined relationship exists on the basis of this data. Alternatively, the controller 101 may execute a program for determining whether or not a predetermined relationship is established.

If the number of the identified terminals exceeds the maximum multiplexing number for the multiuser transmission, the controller 101 narrows down the terminals to the maximum multiplexing number or less. For example, the terminals which are the closest in a frame size (which may be a packet size or a data size) for transmitting by the multiplexing transmission or in a frame transmission time therefor are preferentially selected. Alternatively, the terminals which are the closest in the number of subframes to be aggregated with the frame transmitted by the multiplexing transmission are preferentially selected. Other method than those described here may be used to narrow down the terminals. The controller 101 is notified by each terminal in advance information required to grasp the frame size or the number of the aggregated subframes of the terminal.

So long as the identified terminals belong to the same group, other terminals may be additionally classified into this group. All the terminals transmitting the simultaneous transmission requests may be classified into the same group without taking into account the sensor characteristic information as a method if the number of the terminals is not more than maximum multiplexing number for the multiuser transmission.

In the case of the above example, the controller 101 groups the terminals 11 to 16 so that at least terminals 11 and 12 belong to the same group. The number of the generated groups may be one or more.

The controller 101 identifies a group meeting an execution condition for the multiuser transmission and transmits a trigger frame (described later) for instructing to perform UL-OFDMA to the identified group. The execution condition may be that the UL-OFDMA transmission request is received from one terminal belonging to the group. If a timing for UL-OFDMA is predetermined for the group, the execution condition may be that the relevant timing arrives. For example, if an interval for acquiring an image is defined, a timing every time the acquisition interval elapses may be adopted. If a travel speed of the car is associated with an image transfer speed, at a timing based on this information may be adopted. The timing for UL-OFDMA may be determined by scheduling.

The controller 101 may store a history of the UL-OFDMA transmission request received from terminal in the storage such as the memory 106 to learn the timing for UL-OFDMA on the basis of the history. For example, an interval between the transmission requests is measured to determine a timing depending on the relevant interval.

The controller 101 transmits the trigger frame via the transmitter 102 to the terminals belonging to a target group to perform UL-OFDMA. A timing for transmitting the trigger frame may be determined by calculating backward from a timing when UL-OFDMA is to be performed. The trigger frame includes information specifying each terminal, information on a communication resource used by each terminal, and other parameters. Examples of other parameters include a data length (or packet length) of the transmitted data, and an MCS (Modulation and Coding Scheme). In addition, a timing for uplink transmission may be specified in the trigger frame. An RA (Receiver Address) of the trigger frame is a broadcast address or a multicast address, for example, and a TA (Transmitter Address) is a BSSID (that is, MAC address) of the AP itself. A format of the trigger frame is not limited to a specific format. A Type and Subtype in a Frame Control field in a MAC header may be used to represent that a frame is the trigger frame. In accordance with IEEE802.11 standard, the Type and the Subtype may be used to define kinds of various frames.

The controller 101 receives the data frames, after elapse of a predetermined time period from completion of transmitting the trigger frame, from the terminals specified in the trigger frame by use of the communication resources allocated to the respective terminals. In other words, the data frames are transmitted at the same timing from a plurality of terminals by use of the different communication resources. This allows the multiuser transmission to be performed. An RA of the received data frame is the BSSID (MAC address) of the AP 11 and a TA is the MAC address of the terminal. A predetermined time period may be an SIFS or a time period longer than the SIFS. In the case where the timing for the uplink transmission is specified in the trigger frame, in accordance with that timing the frames is received.

The controller 101 receives the data frames transmitted by way of UL-OFDMA from a plurality of terminals and subjects the frames to a FCS check (such as the CRC check) to check whether or not it successfully receives the data frames. If the data frame is an aggregation frame, whether the reception is succeeded or failed is checked for each subframe.

The controller 101 generates an acknowledgement response frame in which check results of the data frames received from a plurality of terminals (a check result for each subframe in the case of the aggregation frame) are together stored. The acknowledgement response frame includes the identification information of the terminals and the check results of the data frames received from the terminals in a state where these are associated with each other. As an example of the acknowledgement response frame like this, a Multi-STA BA frame (MS-BA frame) investigated in IEEE802.11ax may be used, or a frame may be newly defined. Here, assume that the MS-BA frame is generated. The AP 1 transmits the generated MS-BA frame after elapse of a predetermined time period from the UL-OFDMA reception. Each terminal identifies the check result addressed to the terminal itself from the received MS-BA frame to determine whether or not the data frame is successfully transmitted.

Instead of together storing the check results of the data frames received from the terminals in one acknowledgement response frame, acknowledgement response frames respectively storing the check results for the individual terminals may be transmitted to these terminals in order. In this case, the ACK frame or the BA frame may be used as the acknowledgement response frame depending on whether or not the data frame transmitted from each terminal is the aggregation frame. The ACK frame of the BA frame may be transmitted by downlink multiuser multiplexing by use of the communication resource. For example, downlink multiuser MIMO (Multi-User Multi-Input Multi-Output) (hereinafter, referred to as DL-MU-MIMO) scheme introduced in IEEE802.11ac may be used.

In the scheduling described above, the terminals are grouped in advance, but the terminals are not necessarily grouped in advance. For example, in a case where the UL-OFDMA transmission request is received from one terminal, one or more terminals to be combined with the relevant terminal are selected to generate a group. Then, the trigger frame for instructing the terminals belonging to this group to perform UL-OFDMA may be transmitted. If the terminal transmitting the transmission request is the terminal transmitting the simultaneous transmission request and the sensor characteristic information, a terminal to be combined is selected from among the other terminals transmitting the simultaneous transmission request and the sensor characteristic information. For example, if the controller 101 receives the UL-OFDMA transmission request from the terminal 11, the terminal 12 is selected as those to be combined.

The controller 101 may access a storage for storing the information to be transmitted via the trigger frame or the like to the terminal or the information received from the terminal, or the both of these to read out the information. The storage device may be an internal memory device, an external memory device, a volatile memory device, or a non-volatile memory device. The storage device may also be an SSD, a hard disk or the like other than the memory.

The above described isolation of the processes of the controller 101 and the transmitter 102 is an example, and another form may be used. For example, the controller 101 may perform the process until the digital domain process and the DA conversion, and the transmitter 102 may perform process subsequent to the DA conversion. As for the isolation of the processes of the controller 101 and the receiver 103, similarly, the receiver 103 may perform the process before the AD conversion and the controller 101 may perform the digital domain process including processes following the AD conversion.

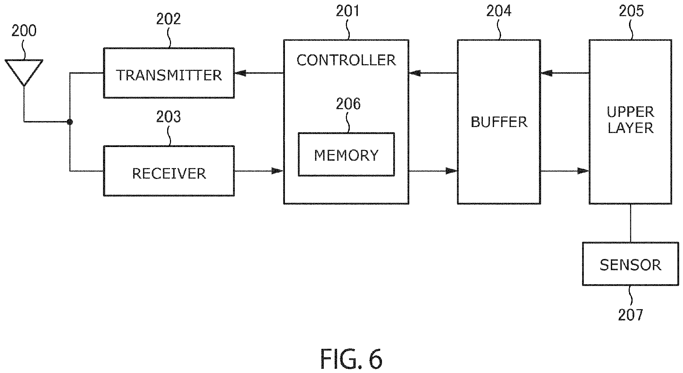

FIG. 6 is a functional block diagram of the terminal according to the present embodiment. The terminals 11 to 16 each have a configuration shown in FIG. 6. The terminal includes an antenna 200, a controller (or controlling circuitry) 201, a transmitter 202, a receiver 203, a buffer 204, an upper layer 205, and a sensor 207. The controller 201 includes a memory 206. The number of the antennas is one although the number may be two or more. The controller 201 corresponds to a controlling circuitry or baseband integrated circuitry which controls communication with the AP 1. The transmitter 202 and the receiver 203 form a wireless communicator or RF integrated circuitry which transmits and receives the frames via the antenna 200. A process of the controller 201, and all or a part of a digital domain process of the transmitter 202 and the receiver 203 may be performed by software (program) executing on a processor such as a CPU, or may be performed by hardware, or may be performed by the both of software and hardware. The AP 1 may include a processor performing the process of the controller 201, all or a part of the transmitter 202 and the receiver 203.

The buffer 204 is a storage for transferring data or frame between the upper layer 205 and the controller 201. The buffer 204 may be a volatile memory such as a DRAM or a non-volatile memory such as a NAND, or an MRAM. The upper layer 205 may perform an upper communication process than a MAC layer such as TCP/IP or UDP/IP. Alternatively, TCP/IP or UDP/IP may be performed in the controller 201 and the upper layer 105 may also perform a process of an application layer of processing the data upper than TCP/IP or UDP/IP. An operation of the upper layer 205 may be performed by software (program) processing by a processor such as a CPU, or may be performed by hardware, or may be performed by the both of the software and the hardware.

The controller 201 mainly performs a process of the MAC layer, a part of a process of a physical layer (e.g., a process concerning multiuser transmission such as UL-OFDMA or UL-MU-MIMO or the like). The controller 201 transmits and receives the frame via the transmitter 202 and the receiver 203 to control the communication with the terminals. The controller 201 holds information on the AP 1 and the terminal itself and information required for communicating with the AP 1 in the memory 206 or an accessible external memory. The frame is transmitted in accordance with the CSMA/CA. In other words, carrier sense is performed before transmission, and if an access right with respect to a wireless medium is acquired, the frame is transmitted.

The controller 201 may include a clock generator generating a clock to manage an internal time using the clock generated by the clock generator. The controller 201 may output externally the clock created by the clock generator. Alternatively, the controller 201 may receive a clock generated by an external clock generator to manage an internal time using the relevant clock generated.

The controller 201 detects the AP 1 by channel search and transmits the association request frame to perform the association process. The controller 201 receives the association response frame for authorizing the connection to establish the wireless link with the AP 1. In the association process, required information on capability or attribute etc. (which may include capability information on whether to be compliant with UL-OFDMA or UL-MU-MIMO) are exchanged with each other. If the connection is authorized, the controller 201 detects from the association response frame the AID that is a number assigned locally in its network (BSS). The AID is used as the identification information of the terminal itself. The controller 201 may perform an authentication process with the AP 1 if necessary before the association process. The controller 201 periodically checks the buffer 204 to confirm the state of the buffer 204. Alternatively, the controller 201 confirms the state of the buffer 204 according to a trigger given from an external device such as the buffer 204.

The transmitter 202 subjects the input frames to desired processes of the physical layer such as a coding and modulation process or adding the physical header. The transmitter 102 subjects the physical packet to DA conversion, a filtering process to extract components of a desired band, frequency conversion (up-conversion) and the like to amplify signals obtained through these processes by a pre-amplifier and radiate the amplified signals as radio waves from the antenna 200. If a plurality of antennas are provided, the directivity for transmission can be also controlled.

The signal received by the antenna 200 is processed in the receiver 203. The received signal of the antenna 200 is amplified by a low noise amplifier (LNA), is subjected to frequency conversion (down-convert), and is subjected to a filtering process, thereby allowing a desired band component to be extracted. The extracted signal is further converted into digital signals through AD conversion and subjected to the processes of the physical layer such as demodulation, error-correcting decode, and the process of the physical header, and thereafter, the frame is input to the controller 201.

The controller 201 carries out the CRC check of the frame received from the AP 1 (in a case of the aggregation frame, the CRC check is carried out for the subframes in the aggregation frame). The controller 201 generates an acknowledgement frame depending on a result of the CRC check, and transmits an acknowledgement response frame via the transmitter 202 after elapse of a predetermined time period from completion of receiving the frame.

The controller 201 or the upper layer 205 grasps whether or not the transmission of the simultaneous transmission request, or the transmission of the sensor characteristic information, or both are required. If the transmission is required, the controller 201 transmits a frame containing the simultaneous transmission request or the sensor characteristic information, or both of them to the AP 1. The frame may be the data frame or the management frame. Here, the simultaneous transmission request or the sensor characteristic information or both of them may be stored in the MAC header or Frame Body field of the frame to be transmitted. If stored in the Frame Body field, the data transferred by the upper layer 205 to the MAC layer (controller 201) may contain the simultaneous transmission request or the sensor characteristic information, or both of them. Alternatively, the MAC layer may generate data including the simultaneous transmission request or the sensor characteristic information, or both of them and store the generated data in the Frame Body field. In the latter case that the MAC layer generates the data, if the upper layer 205 grasps whether or not the transmission is required, the upper layer 205 may provide the controller 201 with an instruction to transmit the simultaneous transmission request or the sensor characteristic information, or both of them such that the MAC layer may generate the data in accordance with the transmission instruction. Alternatively, if the MAC layer grasps whether or not the transmission is required, the MAC layer may autonomously determine to transmit the simultaneous transmission request or the sensor characteristic information, or both of them.

Once the controller 201 receives the trigger frame from the AP 1, it determines whether or not the terminal of itself is specified in the trigger frame. In the terminal of itself is specified (that is, if the AID of the terminal of itself is included), the controller 201 uplink-transmits the data frame by use of the communication resource specified in the trigger frame. The controller 201 generates the data frame in accordance with a parameter specified in the trigger frame. The data frame includes data detected by the sensor 207 included in the terminal, for example. An RA of the generated data frame is a BSSID, and a TA is a MAC address of the terminal of itself. The controller 201 transmits the data frame after elapse of a predetermined time period from completion of receiving the trigger frame. A predetermined time period may be an SIFS or a time period longer than the SIFS. In the case where the timing for the uplink transmission is specified in the trigger frame, in accordance with that timing the frames is transmitted. The transmitted data frame may be an aggregation frame in which a plurality of subframes (MPDUs) are aggregated. In this case, the data of the sensor 207 may be stored in the Frame Body field in the individual subframe.

The controller 201 receives the acknowledgement response frame (here, MS-BA frame) from the AP 1 after elapse of a predetermined time period from uplink-transmitting the data frame. The controller 201 analyzes the acknowledgement response frame to identify the check result addressed to the terminal itself, and thereby, determines whether or not the data frame is successfully transmitted.

The controller 201 may access a storage device that stores either information to be notified to the AP 1 or information notified from the AP 1 or both of these pieces of information and read the information. The storage device may be an internal memory device, an external memory device, a volatile memory device, or a non-volatile memory device. The storage device may also be an SSD, a hard disk or the like other than the memory.

The above described isolation of the processes of the controller 201 and the transmitter 202 is an example, and another form may be used. For example, the controller 201 may perform the process until the digital domain process and the DA conversion, and the transmitter 202 may perform process subsequent to the DA conversion. As for the isolation of the processes of the controller 201 and the receiver 203, similarly, the receiver 203 may perform the process before the AD conversion and the controller 201 may perform the digital domain process including processes following the AD conversion.

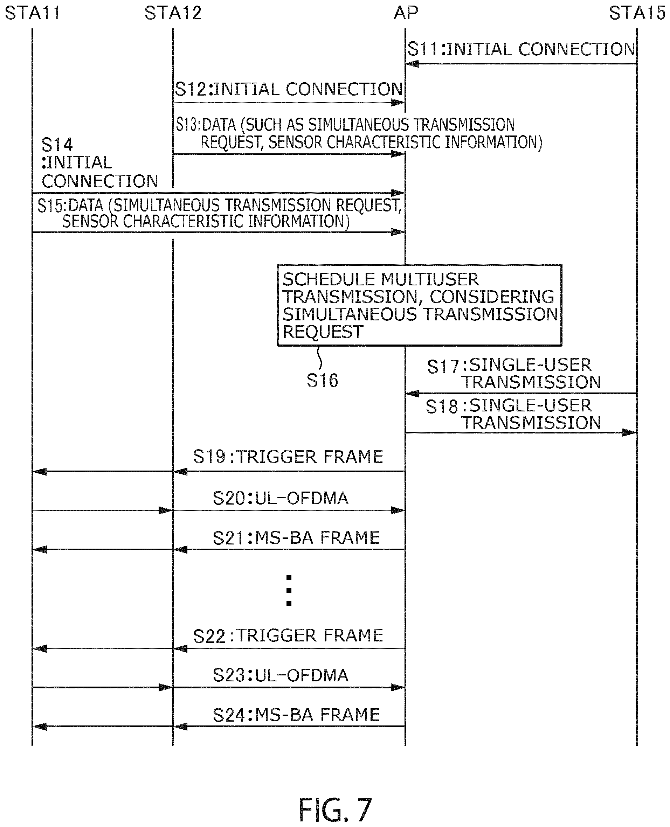

FIG. 7 is a sequence diagram of the wireless communication system in FIG. 1. Here, for the purpose of illustration, operations of the AP 1 and terminals (designated by STA in the figure) 11, 12, and 15 are shown along a temporal axis in a longitudinal direction, but actually the terminals 13, 14, and 16 also communicate with the AP 1. In this sequence, on the basis of the simultaneous transmission request and the sensor characteristic information from the terminals 11 and 12, the AP 1 classifies these terminals into the same group and makes these terminals simultaneously perform the uplink multiuser transmission. By utilizing the simultaneous transmission request and the sensor characteristic information, the AP 1 can determine the terminals from which the data is to be simultaneously collected. In this example, assume that UL-OFDMA is the uplink multiuser transmission without limitation. Hereinafter, this sequence is described in detail.

The car's engine starting up by an user operation, electrical energy is supplied from the battery equipped in the car to the AP 1 and the terminals 11 to 16 to start up the AP 1 and the terminals 11 to 16 (the AP and the terminals become operable). The AP 1 selects a channel from a plurality of channels belonging to a predetermined frequency band (5 GHz band, 2.4 GHz band or the like) to determine the selected channel as an operational channel used in the BSS. The AP 1 periodically transmits the beacon frame by way of the broadcast using the selected channel to notify the attribute information or the like of itself to the BSS.

The terminals 11 to 16 each receive the beacon frame through the channel search to identify the channel used by the AP 1. Specifically, the terminals 11 to 16 analyze the beacon frame to detect the AP 1 and perform an initial connection process (association process) on the AP 1. The terminals 11 to 16 may determine from the content of the beacon frame whether the AP 1 is compliant with UL-OFDMA or UL-MU-MIMO, or both of them. The detection of the AP 1 may be made by, besides receiving the beacon frame, transmitting a probe request frame using an arbitrarily selected channel and receiving a probe response frame corresponding to the probe request frame from the AP 1.

In the example in the figure, the terminal 15 of the terminals 11 to 16 first acquires an access right to the wireless medium and performs the initial connection process on the AP 1 (S11). The access right is acquired in accordance with the CSMA/CA, for example. The terminal 15 transmits an association request frame to the AP 1 which the terminal 15 is to request for connection on the basis of the acquired access right. The AP 1 transmits an ACK frame with respect to the association request frame, and thereafter, transmits an association response frame as a response to the association request frame. The terminal transmits an ACK frame with respect to the association response frame. This allows the terminal 15 to be connected to the AP 1 and be made to belong to the BSS formed by the AP 1. The terminal 15 may contain information on whether it is compliant with UL-OFDMA or information on whether it is compliant with UL-MU-MIMO, or both of them in the association request frame or other management frames transmitted to the AP 1. In the example, assume that the terminals 11 to 16 are compliant with UL-OFDMA.

Subsequently to the terminal 15, the terminal 12 acquires an access right to the wireless medium and similarly performs the initial connection process on the AP 1 (S12). After the initial connection process, the terminal 12 subsequently acquires an access right to the wireless medium and transmits to the AP 1 the data frame having the Frame Body field in which the simultaneous transmission request and the sensor characteristic information are set (S13). The sensor characteristic information of the terminal 12 represents that the sensor equipped in the terminal 12 is the camera provided to the left sideview mirror of the car. The simultaneous transmission request and the sensor characteristic information are not necessarily transmitted by means of the same data frame, and may be transmitted respectively by means of different data frames. The simultaneous transmission request or the sensor characteristic information, or both of them may be transmitted by means of not the data frame but the management frame such as the association request frame. In this case, the AP 1 may manage the simultaneous transmission request or the sensor characteristic information directly by the controller 101 not via the upper layer 105. That is, the example in the figure illustrates that the information is transmitted and received by means of a frame different from the frame used for the association process, but the information may be transmitted and received using the field in the frame used for the association process.

Next, the terminal 11 acquires an access right to the wireless medium and performs the initial connection process on the AP 1, similarly to the terminal 12 (S14). After the initial connection process, the terminal 11 subsequently acquires an access right to the wireless medium and transmits to the AP 1 the data frame having the Frame Body field in which the simultaneous transmission request and the sensor characteristic information are set (S15). The sensor characteristic information of the terminal 11 represents that the sensor equipped in the terminal 11 is the camera provided to the right sideview mirror of the car.

Although not shown in the figure, the terminals 13, 14, and 16 similarly perform the initial connection process on the AP 1 to belong to the BSS of the AP 1. In the example, assume a case that only the terminals 11 and 12 of the terminals 11 to 16 transmit the simultaneous transmission request and the sensor characteristic information. Here, the terminals 13 to 16 are assumed to not transmit the simultaneous transmission requests, but even in this case, the terminals 13 to 16 may transmit the sensor characteristic information to the AP 1. The AP 1 may utilize the sensor characteristic information received from the terminals 13 to 16 in scheduling UL-OFDMA or in the process of the application performed in the upper layer 105.

The terminal 11 to the terminal 16, after connecting to the AP 1, may individually perform single-user communication (SU communication) with the AP 1. For example, the terminal 15 may perform the carrier sense on the data detected by the sensor 207 of the terminal itself (such as the tire pneumatic pressure data) at an arbitrary timing or a predetermined timing (e.g., a certain cycle) to autonomously transmit the data (S17). The AP 1 may also perform the single-user communication individually with the terminals (S18). For example, the AP 1 may transmit to the terminal 15 a frame for instructing the terminal 15 to transmit desired data such as the data detected by the sensor 207 or the sensor characteristic information. The AP 1 may transmit a frame for controlling an operation mode of the terminal such as a frame for instructing to sleep for a certain time period. The frame transmitted by the AP 1, concerning its classification, may be the data frame, the management frame, or the control frame.

In the above steps, between the AP 1 and the terminals, if a frame requiring the acknowledgement response is received, the acknowledgement response frame is to be transmitted after elapse of a certain time period from the completion of the reception (such as after the SIFS). Examples of the acknowledgement response frame used for the single-user communication include an ACK frame or a BA (Block Ack frame).

The AP 1 schedules UL-OFDMA at an arbitrary timing or a predetermined timing (S16). A predetermined timing may be a timing in a certain cycle, or a timing when a predetermined event occurs. A predetermined event may include a certain time period elapsing from the AP 1 starting up, the connection with the estimated terminals completing, a window or a door of the car opening or closing, or the like. In scheduling, one or more groups of the terminals simultaneously performing UL-OFDMA are generated, for example. In the case that a plurality of terminals transmit the simultaneous transmission requests, the AP 1 identifies the terminals to be classified into the same group from the plurality of terminals transmitting the simultaneous transmission requests on the basis of the sensor characteristic information, and leastwise classifies the identified terminals into the same group. The terminals belonging to the same group are the terminals to simultaneously perform the uplink transmission (UL-OFDMA).

In the example, the AP 1 receives the simultaneous transmission request and the sensor characteristic information from the respective terminals 11 and 12 and determines that the sensor characteristic information of the terminals 11 and 12 meet a predetermined relationship. Therefore, the AP 1 classifies the terminals 11 and 12 into the same group. In other words, the terminals 11 and 12 are made to not belong to the different groups. So long as a restriction on the maximum multiplexing number for the multiplexing transmission is met, another terminal may be added to the group the terminals 11 and 12 belong to. In other words, the terminal which transmits the simultaneous transmission request and whose sensor characteristic information meets a predetermined relationship is preferentially selected, and if further addition is allowed, another terminal may be selected to be classified into the same group. The relevant another terminal may or may not be the terminal transmitting the simultaneous transmission request.

The AP 1 groups the terminal not transmitting the simultaneous transmission request and the sensor characteristic information on the basis of arbitrary criteria. For example, the terminals closer in a size of the transmitted frame (which may be a packet size or a data size) may be classified into the same group. Alternatively, the terminals the same in the MCS to be used may be classified into the same group. Alternatively, in a case where the terminals transmit the aggregation frames, terminals which are the same or the closest in the number of the aggregated subframes may be classified into the same group. The AP 1 is notified by each terminal in advance information required to grasp the frame size or the number of the aggregated subframes.

Once the AP 1 determines that the group the terminals 11 and 12 belong to are to perform UL-OFDMA, it transmits a trigger frame to the terminals 11 and 12 (S19). Before transmitting the trigger frame, the AP 1 acquires an access right to the wireless medium in accordance with the CSMA/CA. The trigger frame includes information specifying the terminals 11 and 12, information on a resource unit used by the terminals 11 and 12, and other parameters. Examples of other parameters include the packet length (or frame length of data length) to be transmitted, and the MCS. In addition, a timing for uplink transmission may be specified in the trigger frame.

Once the terminals 11 and 12 receive the trigger frame from the AP 11, each of them uplink-transmits the data frame by use of the resource unit specified in the trigger frame after elapse of a predetermined time period (S20). In the case where the timing for the uplink transmission is specified in the trigger frame, in accordance with that timing the frames is transmitted. This allows the data frames to be simultaneously transmitted from the terminals 11 and 12 at the same timing by use of the different resource units. That is, UL-OFDMA transmission is performed. Here, the terminals 11 and 12 each generate the data frame in accordance with the parameter specified in the trigger frame. In the example, each of the terminals 11 and 12 generates the data frame having the Frame Body field in which data of an image detected by the sensor 207 included in the terminal itself is set. An RA (Receiver Address) of the generated data frame is the BSSID (MAC address) of the AP 11, and a TA (Transmitter Address) is the MAC address of the terminal itself. The data frames transmitted by the terminals 11 and 12 each may be an aggregation frame in which a plurality of subframes (MPDUs) are aggregated. In this case, the image data may be stored in the Frame Body field in the individual subframe.

The AP 1 receives the data frames transmitted by way of UL-OFDMA from the terminals 11 and 12 and subjects the frames to the FCS check (such as the CRC check) to check whether or not it successfully receives the data frames. If the data frame is an aggregation frame, whether the reception is succeeded or failed is checked for each subframe.

The AP 1 generates an acknowledgement response frame in which check results of the data frames received from the terminals 11 and 12 (a check result for each subframe in the case of the aggregation frame) are together stored. The acknowledgement response frame includes the identification information of the terminals 11 and 12 and the check results of the data frames received from the terminals 11 and 12 in a state where these are associated with each other. Here, as an example of the acknowledgement response frame, the MS-BA frame described above is used. The AP 1 transmits the generated MS-BA frame after elapse of a predetermined time period from the UL-OFDMA reception (S21). Each of the terminals 11 and 12 analyzes the received MS-BA frame to identify the check result addressed to the terminal itself, and determines whether or not the data frame is successfully transmitted on the basis of the identified check result. The AP 1 may not transmit the MS-BA frame but may transmit the ACK frame (or BA frame) individually to the terminals 11 and 12 depending on their check results in order. Alternatively, the transmission may be by downlink multiuser multiplexing.

Once the AP 1 determines again that the group the terminals 11 and 12 belong to are to perform UL-OFDMA, it transmits a trigger frame (S22) to make the terminals 11 and 12 transmit the data frames by way of UL-OFDMA (S23). The AP 1 generates the MS-BA frame depending on the check results of the data frames received from the terminals 11 and 12 and transmits the generated MS-BA frame (S24).

In the above example, the terminals equipped with the cameras for the right and left sideview mirrors are classified into the same group, but other various terminal combinations can be made. For example, a terminal equipped with the acceleration sensor and terminals each equipped with a camera detecting an image for control (e.g., terminals 11 and 12) may be classified into the same group such that the image recognition process and acceleration values are used to automatically control the car. Terminals each equipped with a sensor (camera) detecting an image for control may be classified into the same group, and terminals each equipped with a sensor (camera) detecting an image for enterprise may be classified into another same group.

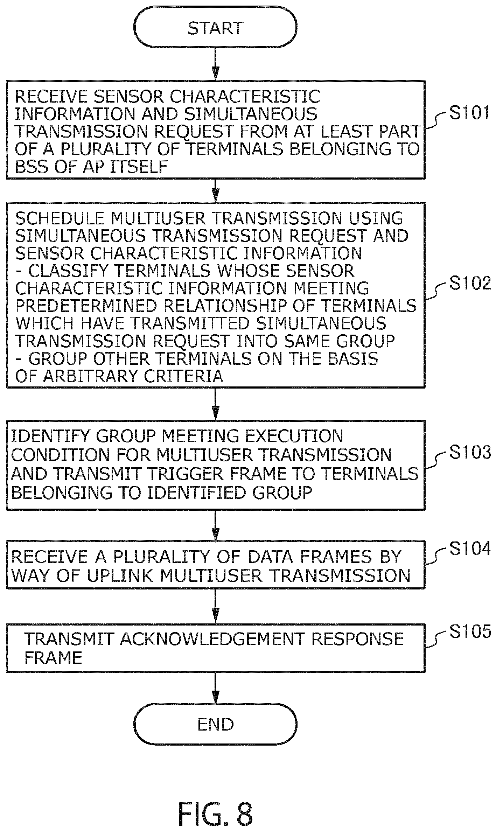

FIG. 8 is a flowchart of an operation of the AP 1 according to the present embodiment. The AP 1 receives the sensor characteristic information and the simultaneous transmission request from at least a part of a plurality of terminals belonging to the BSS of the AP 1 itself (S101).

The AP 1 schedules the multiuser transmission at an arbitrary timing or a predetermined timing (S102). In scheduling, the AP 1 identifies the terminals whose sensor characteristic information meeting a predetermined relationship from the terminals transmitting the simultaneous transmission requests, and classifies the identified terminals into the same group. The terminals not transmitting the simultaneous transmission request are grouped on the basis of arbitrary criteria.

The AP 1 identifies the group meeting the execution condition for the multiuser transmission and transmits a trigger frame to the terminals belonging to the identified group (S103). The trigger frame specifies, for each of the terminals belonging to the group, the identification information of the terminal, the identification information of the communication resource used for the uplink transmission, and other parameters. Other parameters include the MCS and the packet length, as an example.

The AP 1 receives a plurality of data frames transmitted by way of the uplink multiuser transmission (multiplexing transmission) from a plurality of terminals belonging to the above group after elapse of a predetermined time period from the completion of transmitting the trigger frame (S104). Each data frame includes the data detected by the sensor 207 in each terminal. A predetermined time period may be defined in advance by the standard or in the system, or may be a specified timing in the case that the trigger frame specifies the timing for the uplink transmission.

The AP 1 carries out the checks such as the CRC on the basis of the FCSs in the data frames received from these terminals, and transmits an acknowledgement response frame (such as the MS-BA frame) in which check results of the respective terminals are stored after elapse of a certain time period from receiving the data frames (e.g., after elapse of the SIFS) (S105).

In the present embodiment, UL-OFDMA or UL-MU-MIMO is described as the multiuser transmission, but a scheme combining these schemes (UL-OFDMA & UL-MU-MIMO) can be performed.

Hereinabove, according to the present embodiment, by utilizing the simultaneous transmission request and the sensor characteristic information, the AP 1 can properly determine the terminals which need to be made to simultaneously perform the multiuser transmission.

### (Modification Example 1)

The AP 1 may be configured to identify the terminals to simultaneously perform UL-OFDMA only on the basis of the simultaneous transmission request without taking into account the sensor characteristic information. Specifically, the AP 1 may select the terminals that are to simultaneously perform UL-OFDMA preferentially from the terminals transmitting the simultaneous transmission requests, and classify the selected terminals into the same group. If the number of the terminals transmitting the simultaneous transmission requests is equal to or less than the maximum multiplexing number, all the terminals transmitting the simultaneous transmission requests may be selected. In the modification example, the terminals may omit the transmissions of the sensor characteristic information.

### (Modification Example 2)

In the above embodiment, the terminals made to simultaneously perform the multiuser transmission (such as UL-OFDMA) are identified from among a plurality of terminals transmitting the simultaneous transmission requests. However, the transmissions of the simultaneous transmission requests from the respective terminals may be omitted as an aspect. For example, in a case that whether or not the simultaneous transmission request is made is obviously defined to be unique by the sensor characteristic information, the simultaneous transmission request is not the necessary information. In this case, the AP 1 identifies the terminals that are to simultaneously perform the multiuser transmission on the basis of the sensor characteristic information of a plurality of terminals. For example, the terminals of which the sensor characteristic information has a predetermined relationship above are selected.

### (Modification Example 3)

In the above embodiment, the terminals 11 and 12 autonomously transmit the simultaneous transmission request and the sensor characteristic information to the AP 1, but the AP 1 may inquire of the terminals whether or not the simultaneous transmission request is made so that the terminal having the simultaneous transmission request may transmit at least one of the simultaneous transmission request and the sensor characteristic information in response to the inquiry. For example, the AP 1 transmits by way of the broadcast an inquiry frame, and the terminal having the simultaneous transmission request is to respond to this inquiry in a certain time period. The AP 1 may schedule the multiuser transmission when this certain time period elapses (S16).

### (Second Embodiment)

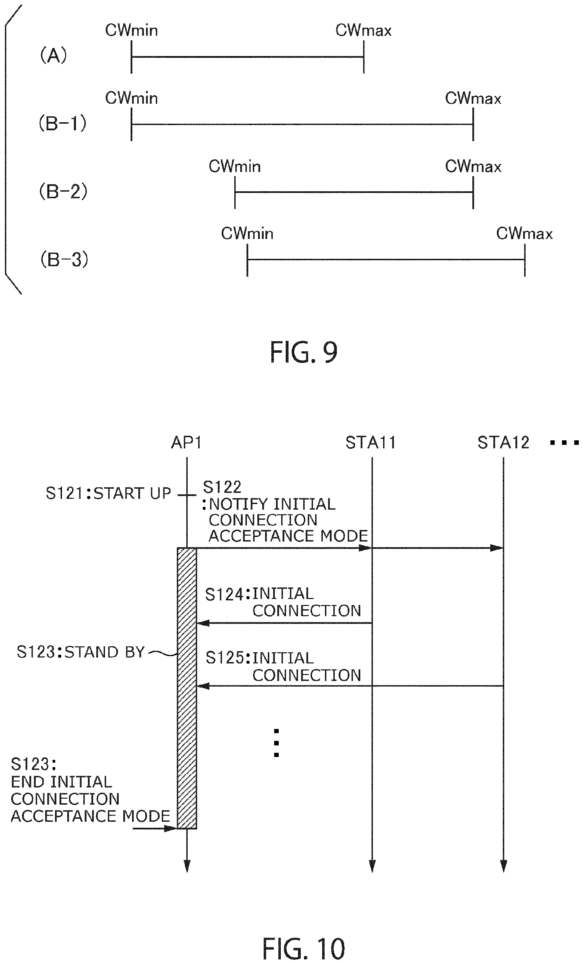

When comparing the terminal in compliant with the multiuser transmission (hereinafter, referred to as multiuser (MU) terminal) with the terminal not compliant (hereinafter, referred to as single-user (SU) terminal), the MU terminal has a chance of the multiuser transmission in addition to the single-user transmission, and thus, the SU terminal reduces a chance of the transmission, decreasing fairness in some cases. In this case, a contention window (CW) value for the MU terminal is made larger than that for the SU terminal to make the MU terminal more likely to transmit by way of the multiuser (make the MU terminal less likely to transmit by way of the single-user), ensuring the fairness. Here, making the CW value larger includes making the CWmax larger, making the CWmin larger, or making both larger. FIG. 9(A) shows an example of the CW value for the AP 1. At this time, making the CW value larger includes making the CWmax larger as shown in FIG. 9(B-1), making the CWmin larger as shown in FIG. 9(B-2), or making both larger as shown in FIG. 9(B-3).

On the other hand, the AP 1 may want the terminals belonging to a certain group to perform the uplink transmission by way of the multiuser transmission inevitably at a predetermined timing in some cases. For example, the AP 1 may want important data such as the image for control (e.g., images of both sideview mirrors) to be transmitted by way of the multiuser transmission at a predetermined timing in some cases. As described above, in order to transmit the trigger frame, the access right to the wireless medium needs to be acquired, but if the number of terminals competing in the carrier sense (SU terminal and MU terminal) is large, the access right is not likely to be acquired to disable the trigger frame to be transmitted at a desired timing.

In the present embodiment, by making the CW value for the MU terminal larger than that for the AP 1, a chance of transmitting the trigger frame by the AP 1 is ensured. For the reason above, even if the CW value for the MU terminal is larger than that for the SU terminal, there is no problem. The CW value for AP 1 may be the same as the CW value for the SU terminal (where the CWmax and the CWmin are the same). The CW value for AP 1 may be made smaller than the CW value for the SU terminal to further ensure a chance of transmitting the trigger frame.

The controller 101 in the AP 1 determines the CW value used for the MU terminal so as to be larger than the CW value for AP 1. The controller 101 in the AP 1 transmits a frame specifying the determined CW value to the MU terminal. The frame specifying the CW value, concerning its classification, may be the data frame, the management frame, or the control frame. The same CW value may be determined for the all MU terminals or different CW values may be determined for the respective MU terminal. For example, the MU terminal requiring many chances of the single-user transmission in addition to the multiuser transmission may have a CW value smaller than other MU terminal not requiring. The controller 101 in the AP 1 may determine the CW value used for the MU terminal so as to be larger than the CW value for the SU terminal. The CW value used for the MU terminal may be determined so as to be larger than both the CW value for AP 1 and the CW value for the SU terminal.

The AP 1 may not control the CW value for the MU terminal, and the MU terminal side may autonomously control the CW value instead. Specifically, the controller in the MU terminal, grasping that the AP to which the MU terminal itself connects is compliant with the multiuser transmission, may autonomously control the CW value for itself so as to be larger than a default value (a default value of the CWmax and a default value of the CWmin, or both).

The controller 101 in the AP 1 may determine the CW value for the MU terminal depending on a probability that the trigger frame was transmitted at a desired timing (for example, a probability that the access right was acquired at the first backoff). Specifically, the lower the probability, the larger the CW value the MU terminal is made, further ensuring the chance of transmitting the trigger frame. For example, a range from 0 to 1 may be divided by one or more thresholds into plural sections, depending on which section the probability falls within, the CW value may be determined. In this case, the closer to 1 a section is, the larger CW value is associated with the section.

The MU terminal for which the CW value is to be controlled may be all of the MU terminals belonging to the AP 1 or only the MU terminal transmitting the simultaneous transmission request or the sensor characteristic information, or both of them.

In the present embodiment, the CW value for the MU terminal is made larger than the CW value for AP 1, but alternatively, the CW value for AP 1 may be made smaller than the MU terminal. Making the CW value smaller includes making the CWmax smaller, making the CWmin smaller, or making both smaller. In other words, so long as the CW value for the MU terminal is made relatively larger than the CW value for AP 1, either CW value of the CW value for the MU terminal and the CW value for AP 1 may be changed.

Alternatively, instead of changing the CW value, a length of the carrier sense of the fixed time, which is performed before the backoff in the carrier sense, may be changed. Specifically, a fixed time for the AP 1 may be shorter than a fixed time for the MU terminal. For example, in the case of the MU terminal, the fixed time may be set to the DIFS or the AIFS, and in the case of the AP 1, the fixed time may be set to a PIFS (point coordination function interframe space). A length of the PIFS is shorter than that of the DIFS or AIFS. Here, the fixed time for the AP 1 is made shorter, but the fixed time for the MU terminal may be made longer. In other words, so long as the fixed time for the AP 1 is relatively shorter, either fixed time of the fixed time for the AP 1 and the fixed time for the MU terminal may be changed. Similar to the AP 1, a fixed time for the SU terminal may be made relatively shorter than the fixed time for the MU terminal. Both fixed times for the AP 1 and the SU terminal may be made relatively shorter than the fixed time for the MU terminal.

Hereinabove, according to the present embodiment, the conflict with terminal is avoided in the carrier sense to be able to increase the probability that the AP can transmit the trigger frame (the probability that the access right to the wireless medium can be acquired).

### (Third Embodiment)

In the initial connection process described in the first embodiment with reference to FIG. 7, each terminal is required to connect to the AP equipped in the same car as the terminal itself is equipped in, and to not connect to the AP equipped in other cars. The third embodiment shows an embodiment in which each terminal is ensured to be connected to the AP equipped in the same car as the terminal itself is equipped in even if an AP equipped in another car is near the terminal in the initial connection process.

FIG. 10 shows an exemplary operation sequence according to the present embodiment. The AP 1 is supplied with power from a battery equipped in the car or the like to become in a state of capable of accepting an association request from the terminal (S121), and then, carries out an initial connection acceptance mode. The AP 1 transmits information representing that the initial connection acceptance mode is being carried out by means of the beacon frame or other frame by way of the broadcast (S122). While carrying out the initial connection acceptance mode, the AP 1 waits for the association request from the terminal (S123). Each of the terminals 11 and 12 or the like supplied with power together with the AP 1 searches the AP to which the terminal itself is to connect by the channel search, for example. The terminal identifies the AP 1 in the initial connection acceptance mode as the AP to which the terminal itself is to connect, and performs the initial connection process with the relevant AP 1 (S124, S125). When a predetermined termination condition is met, the AP 1 ends the initial connection acceptance mode (S126). As the termination condition, a case where a certain time period elapses from starting the initial connection acceptance mode may be adopted, for example.

As another example of the termination condition, a case where the number of the terminals connected to the AP 1 reaches a certain value may be adopted. The terminals supplied with power and made operable include, besides the terminal performing the initial connection process at the time of starting up, the terminal not performing the initial connection process at the time of starting up but later performing the initial connection process on the AP when a predetermined condition is met. Therefore, the AP 1 grasps in advance a minimum number of the terminals expected to connect to the AP 1 itself at the time of starting up, and when the number of the terminals having connected to the AP 1 itself reaches this minimum number, the AP 1 stops the initial connection acceptance mode. In a case also where the number of the connected terminals does not reach a certain value within a certain time period from starting the initial connection acceptance mode, the initial connection acceptance mode may be stopped.

As an example of the case of not performing the initial connection process at the time of starting up but later performing the initial connection process when a predetermined condition is met, a case where the initial connection process (or reconnection process) is performed on the AP only when the value from the sensor in the terminal has an outlier may be adopted. In a case where the terminal needs to transmit the data to the AP every certain time period but needs not to connect to the AP other than during the transmission, the terminal may connect to the AP every certain time period. In this case, the terminal disconnects the AP after transmitting the data, and then, stands by until the next certain time period elapses. While standing by, the terminal may transit to a sleep mode which is low in power consumption.

In the case where the terminal detects a plurality of APs in the initial connection acceptance mode by the channel search, the AP to connect may be determined on the basis of the past history. For example, every time the terminal connects to the AP, it stores the BSSID (MAC address) of the connected AP in the memory. If a plurality of APs are detected, the terminal identifies, from a connection history stored in the memory, an AP to which the terminal connected the most times in the past, and determines an AP having the same BSSID as the identified AP as the AP to connect. Information used for the determination may not be the past connection history but a past communication history. For example, a traffic amount such as the number of transmitted and received frames and a total data size is calculated for each AP, and the AP having the most traffic amount may be determined. The operation described here is performed by the controller 201 in the terminal, for example.

Hereinabove, according to the present embodiment, the terminal can be ensured to be connected to the AP equipped in the same car as the terminal itself is equipped in even if an AP equipped in another car is near the terminal.

### (Fourth Embodiment)

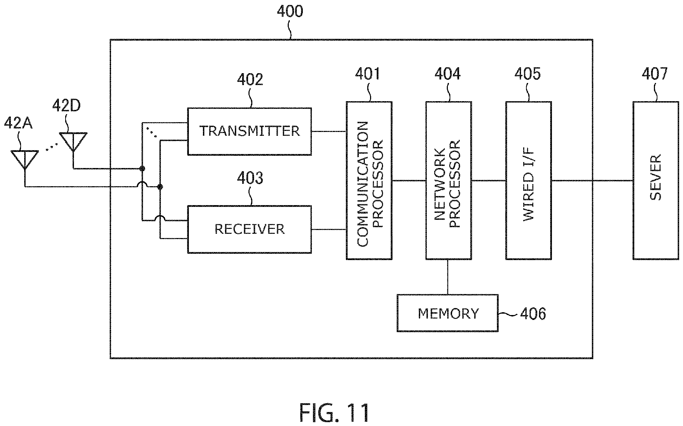

FIG. 11 is a functional block diagram of a base station (access point) 400 according to the embodiment. The access point includes a communication processor 401, a transmitter 402, a receiver 403, antennas 42A, 42B, 42C, and 42D, a network processor 404, a wired I/F 405, and a memory 406. The access point 400 is connected to a server 407 through the wired I/F 405. The communication processor 401 has functions similar to the controller 101 in the first to third embodiments. The transmitter 402 and the receiver 403 have functions similar to the transmitter 102 and the receiver 103 described in the first to third embodiments. The communication processor 404 has functions similar to the upper layer processor in the first to third embodiments. The communication processor 401 may internally possess a buffer for transferring data to and from the network processor 404. The buffer may be a volatile memory, such as an SRAM or a DRAM, or may be a non-volatile memory, such as a NAND or an MRAM.

The network processor 404 controls data exchange with the communication processor 401, data writing and reading to and from the memory 406, and communication with the server 407 through the wired I/F 405. The network processor 404 may execute a higher communication process of the MAC layer, such as TCP/IP or UDP/IP, or a process of the application layer. The operation of the network processor may be performed through processing of software (program) by a processor, such as a CPU. The operation may be performed by hardware or may be performed by both of the software and the hardware.

For example, the communication processor 401 corresponds to a baseband integrated circuit, and the transmitter 402 and the receiver 403 correspond to an RF integrated circuit that transmits and receives frames. The communication processor 401 and the network processor 404 may be formed by one integrated circuit (one chip). Parts that execute processing of digital areas of the transmitter 402 and the receiver 403 and parts that execute processing of analog areas may be formed by different chips. The communication processor 401 may execute a higher communication process of the MAC layer, such as TCP/IP or UDP/IP. Although the number of antennas is four here, it is only necessary that at least one antenna is included.

The memory 406 saves data received from the server 407 and data received by the receiver 402. The memory 406 may be, for example, a volatile memory, such as a DRAM, or may be a non-volatile memory, such as a NAND or an MRAM. The memory 406 may be an SSD, an HDD, an SD card, an eMMC, or the like. The memory 406 may be provided outside of the base station 400.

The wired I/F 405 transmits and receives data to and from the server 407. Although the communication with the server 407 is performed through a wire in the present embodiment, the communication with the server 407 may be performed wirelessly.

The server 407 is a communication device that returns a response including requested data in response to reception of a data forward request for requesting transmission of the data. Examples of the server 407 include an HTTP server (Web server) and an FTP server. However, the server 407 is not limited to these as long as the server 407 has a function of returning the requested data. The server 407 may be a communication device operated by the user, such as a PC or a smartphone. The server 407 may wirelessly communicate with the base station 400.

When the STA belonging to the BSS of the base station 400 issues a forward request of data for the server 407, a packet regarding the data forward request is transmitted to the base station 400. The base station 400 receives the packet through the antennas 42A to 42D. The base station 400 causes the receiver 403 to execute the process of the physical layer and the like and causes the communication processor 401 to execute the process of the MAC layer and the like.

The network processor 404 analyzes the packet received from the communication processor 401. Specifically, the network processor 404 checks the destination IP address, the destination port number, and the like. When the data of the packet is a data forward request such as an HTTP GET request, the network processor 404 checks whether the data requested by the data forward request (for example, data in the URL requested by the HTTP GET request) is cached (stored) in the memory 406. A table associating the URL (or reduced expression of the URL, such as a hash value or an identifier substituting the URL) and the data is stored in the memory 406. The fact that the data is cached in the memory 406 will be expressed that the cache data exists in the memory 406.

When the cache data does not exist in the memory 406, the network processor 404 transmits the data forward request to the server 407 through the wired I/F 405. In other words, the network processor 404 substitutes the STA to transmit the data forward request to the server 407. Specifically, the network processor 404 generates an HTTP request and executes protocol processing, such as adding the TCP/IP header, to transfer the packet to the wired I/F 405. The wired I/F 405 transmits the received packet to the server 407.

The wired I/F 405 receives, from the server 407, a packet that is a response to the data forward request. From the IP header of the packet received through the wired I/F 405, the network processor 404 figures out that the packet is addressed to the STA and transfers the packet to the communication processor 401. The communication processor 401 executes processing of the MAC layer and the like for the packet. The transmitter 402 executes processing of the physical layer and the like and transmits the packet addressed to the STA from the antennas 42A to 42D. The network processor 404 associates the data received from the server 407 with the URL (or reduced expression of the URL) and saves the cache data in the memory 406.

When the cache data exists in the memory 406, the network processor 404 reads the data requested by the data forward request from the memory 406 and transmits the data to the communication processor 401. Specifically, the network processor 404 adds the HTTP header or the like to the data read from the memory 406 and executes protocol processing, such as adding the TCP/IP header, to transmit the packet to the communication processor 401. In this case, the transmitter IP address of the packet is set to the same IP address as the server, and the transmitter port number is also set to the same port number as the server (destination port number of the packet transmitted by the communication terminal), for example. Therefore, it can be viewed from the STA as if communication with the server 407 is established. The communication processor 401 executes processing of the MAC layer and the like for the packet. The transmitter 402 executes processing of the physical layer and the like and transmits the packet addressed to the STA from the antennas 42A to 42D.

According to the operation, frequently accessed data is responded based on the cache data saved in the memory 406, and the traffic between the server 407 and the base station 400 can be reduced. Note that the operation of the network processor 404 is not limited to the operation of the present embodiment. There is no problem in performing other operation when a general caching proxy is used, in which data is acquired from the server 407 in place of the STA, the data is cached in the memory 406, and a response is made from the cache data of the memory 406 for a data forward request of the same data.

The base station (access point) according to the present invention can be applied for the base station in the above-stated any embodiment. The transmission of the frame, the data or the packet used in the any embodiment may be carried out based on the cached data stored in the memory 406. Also, information obtained based on the frame, the data or the packet received by the base station in the first to seventh embodiments may be cached in the memory 406. The frame transmitted by the base station in the first to seventh embodiments may include the cached data or information based on the cached data. The information based on the cached data may include information on a size of the data, a size of a packet required for transmission of the data. The information based on the cached data may include a modulation scheme required for transmission of the data. The information based on the cached data may include information on existence or non-existence of data addressed to the terminal,

The base station (access point) according to the present invention can be applied for the base station in the above-stated any embodiment. In the present embodiment, although the base station with the cache function is described, a terminal (STA) with the cache function can also be realized by the same block configuration as FIG. 11. In this case, the wired I/F 405 may be omitted. The transmission, by the terminal, of the frame, the data or the packet used in the any embodiment may be carried out based on the cached data stored in the memory 406. Also, information obtained based on the frame, the data or the packet received by the terminal in the any embodiment may be cached in the memory 406. The frame transmitted by the terminal in the first embodiment may include the cached data or information based on the cached data. The information based on the cached data may include information on a size of the data, a size of a packet required for transmission of the data. The information based on the cached data may include a modulation scheme required for transmission of the data. The information based on the cached data may include information on existence or non-existence of data addressed to the terminal.

### (Fifth Embodiment)

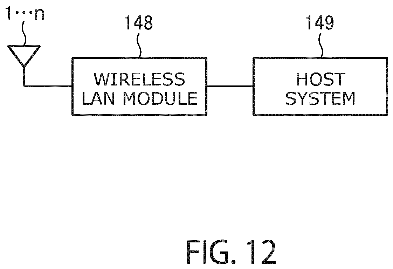

FIG. 12 shows an example of entire configuration of a terminal (non-AP terminal) or a base station (AP). The example of configuration is just an example, and the present embodiment is not limited to this. The terminal or the base station includes one or a plurality of antennas 1 to n (n is an integer equal to or greater than 1), a wireless LAN module 148, and a host system 149. The wireless LAN module 148 corresponds to the wireless communication device according to any of the embodiments. The wireless LAN module 148 includes a host interface and is connected to the host system 149 through the host interface. Other than the connection to the host system 149 through the connection cable, the wireless LAN module 148 may be directly connected to the host system 149. The wireless LAN module 148 can be mounted on a substrate by soldering or the like and can be connected to the host system 149 through wiring of the substrate. The host system 149 uses the wireless LAN module 148 and the antennas 1 to n to communicate with external apparatuses according to an arbitrary communication protocol. The communication protocol may include the TCP/IP and a protocol of a layer higher than that. Alternatively, the TCP/IP may be mounted on the wireless LAN module 148, and the host system 149 may execute only a protocol in a layer higher than that. In this case, the configuration of the host system 149 can be simplified. Examples of the present terminal include a mobile terminal, a TV, a digital camera, a wearable device, a tablet, a smartphone, a game device, a network storage device, a monitor, a digital audio player, a Web camera, a video camera, a projector, a navigation system, an external adaptor, an internal adaptor, a set top box, a gateway, a printer server, a mobile access point, a router, an enterprise/service provider access point, a portable device, a hand-held device, a vehicle and so on.

The wireless LAN module 148 (or the wireless communication device) may have functions of other wireless communication standards such as LTE (Long Term Evolution), LTE-Advanced (standards for mobile phones) as well as the IEEE802.11.

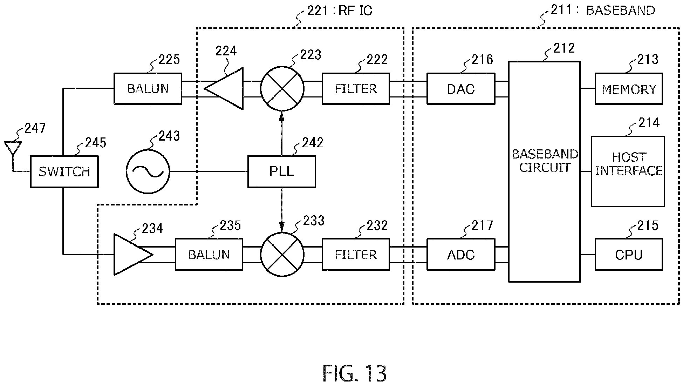

FIG. 13 shows an example of hardware configuration of a WLAN module. The configuration shown in the figure may be applied for each case in where the wireless communication device is mounted in non-AP terminal or in AP (Access Point) provided correspondingly to each function. That is, the configuration can be applied as specific examples of the wireless communication device in FIG. 4 or FIG. 6. In the configuration shown in figure, at least one antenna is included although a plurality of antennas are included. In this case, a plurality of sets of a transmission system (216 and 222 to 225), a reception system (217, 232 to 235), a PLL 242, a crystal oscillator (reference signal source) 243, and a switch 245 may be arranged according to the antennas, and each set may be connected to a control circuit 212. One or both of the PLL 242 and the crystal oscillator 243 correspond to an oscillator according to the present embodiment.

The wireless LAN module (wireless communication device) includes a baseband IC (Integrated Circuit) 211, an RF (Radio Frequency) IC 221, a balun 225, the switch 245, and the antenna 247.

The baseband IC 211 includes the baseband circuit (control circuit) 212, a memory 213, a host interface 214, a CPU 215, a DAC (Digital to Analog Converter) 216, and an ADC (Analog to Digital Converter) 217.

The baseband IC 211 and the RF IC 221 may be formed on the same substrate. The baseband IC 211 and the RF IC 221 may be formed by one chip. Both or one of the DAC 216 and the ADC 217 may be arranged on the RF IC 221 or may be arranged on another IC. Both or one of the memory 213 and the CPU 215 may be arranged on an IC other than the baseband IC.

The memory 213 stores data to be transferred to and from the host system. The memory 213 also stores one or both of information to be transmitted to the terminal or the base station and information transmitted from the terminal or the base station. The memory 213 may also store a program necessary for the execution of the CPU 215 and may be used as a work area for the CPU 215 to execute the program. The memory 213 may be a volatile memory, such as an SRAM or a DRAM, or may be a non-volatile memory, such as a NAND or an MRAM.

The host interface 214 is an interface for connection to the host system. The interface can be anything, such as UART, SPI, SDIO, USB, or PCI Express.

The CPU 215 is a processor that executes a program to control the baseband circuit 212. The baseband circuit 212 mainly executes a process of the MAC layer and a process of the physical layer. One or both of the baseband circuit 212 and the CPU 215 correspond to the communication control apparatus that controls communication, the controller that controls communication, or controlling circuitry that controls communication.

At least one of the baseband circuit 212 or the CPU 215 may include a clock generator that generates a clock and may manage internal time by the clock generated by the clock generator.

For the process of the physical layer, the baseband circuit 212 performs addition of the physical header, coding, encryption, modulation process (which may include MIMO modulation), and the like of the frame to be transmitted and generates, for example, two types of digital baseband signals (hereinafter, "digital I signal" and "digital Q signal").

The DAC 216 performs DA conversion of signals input from the baseband circuit 212. More specifically, the DAC 216 converts the digital I signal to an analog I signal and converts the digital Q signal to an analog Q signal. Note that a single system signal may be transmitted without performing quadrature modulation. When a plurality of antennas are included, and single system or multi-system transmission signals equivalent to the number of antennas are to be distributed and transmitted, the number of provided DACs and the like may correspond to the number of antennas.

The RF IC 221 is, for example, one or both of an RF analog IC and a high frequency IC. The RF IC 221 includes a filter 222, a mixer 223, a preamplifier (PA) 224, the PLL (Phase Locked Loop) 242, a low noise amplifier (LNA) 234, a balun 235, a mixer 233, and a filter 232. Some of the elements may be arranged on the baseband IC 211 or another IC. The filters 222 and 232 may be bandpass filters or low pass filters.

The filter 222 extracts a signal of a desired band from each of the analog I signal and the analog Q signal input from the DAC 216. The PLL 242 uses an oscillation signal input from the crystal oscillator 243 and performs one or both of division and multiplication of the oscillation signal to thereby generate a signal at a certain frequency synchronized with the phase of the input signal. Note that the PLL 242 includes a VCO (Voltage Controlled Oscillator) and uses the VCO to perform feedback control based on the oscillation signal input from the crystal oscillator 243 to thereby obtain the signal at the certain frequency. The generated signal at the certain frequency is input to the mixer 223 and the mixer 233. The PLL 242 is equivalent to an example of an oscillator that generates a signal at a certain frequency.

The mixer 223 uses the signal at the certain frequency supplied from the PLL 242 to up-convert the analog I signal and the analog Q signal passed through the filter 222 into a radio frequency. The preamplifier (PA) amplifies the analog I signal and the analog Q signal at the radio frequency generated by the mixer 223, up to desired output power. The balun 225 is a converter for converting a balanced signal (differential signal) to an unbalanced signal (single-ended signal). Although the balanced signal is handled by the RF IC 221, the unbalanced signal is handled from the output of the RF IC 221 to the antenna 247. Therefore, the balun 225 performs the signal conversions.

The switch 245 is connected to the balun 225 on the transmission side during the transmission and is connected to the LNA 234 or the RF IC 221 on the reception side during the reception. The baseband IC 211 or the RF IC 221 may control the switch 245. There may be another circuit that controls the switch 245, and the circuit may control the switch 245.

The analog I signal and the analog Q signal at the radio frequency amplified by the preamplifier 224 are subjected to balanced-unbalanced conversion by the balun 225 and are then emitted as radio waves to the space from the antenna 247.

The antenna 247 may be a chip antenna, may be an antenna formed by wiring on a printed circuit board, or may be an antenna formed by using a linear conductive element.

The LNA 234 in the RF IC 221 amplifies a signal received from the antenna 247 through the switch 245 up to a level that allows demodulation, while maintaining the noise low. The balun 235 performs unbalanced-balanced conversion of the signal amplified by the low noise amplifier (LNA) 234. The mixer 233 uses the signal at the certain frequency input from the PLL 242 to down-convert, to a baseband, the reception signal converted to a balanced signal by the balun 235. More specifically, the mixer 233 includes a unit that generates carrier waves shifted by a phase of 90 degrees based on the signal at the certain frequency input from the PLL 242. The mixer 233 uses the carrier waves shifted by a phase of 90 degrees to perform quadrature demodulation of the reception signal converted by the balun 235 and generates an I (In-phase) signal with the same phase as the reception signal and a Q (Quad-phase) signal with the phase delayed by 90 degrees. The filter 232 extracts signals with desired frequency components from the I signal and the Q signal. Gains of the I signal and the Q signal extracted by the filter 232 are adjusted, and the I signal and the Q signal are output from the RF IC 221.

The ADC 217 in the baseband IC 211 performs AD conversion of the input signal from the RF IC 221. More specifically, the ADC 217 converts the I signal to a digital I signal and converts the Q signal to a digital Q signal. Note that a single system signal may be received without performing quadrature demodulation.

When a plurality of antennas are provided, the number of provided ADCs may correspond to the number of antennas. Based on the digital I signal and the digital Q signal, the baseband circuit 212 executes a process of the physical layer and the like, such as demodulation process, error correcting code process, and process of physical header, and obtains a frame. The baseband circuit 212 applies a process of the MAC layer to the frame. Note that the baseband circuit 212 may be configured to execute a process of TCP/IP when the TCP/IP is implemented.

### (Sixth Embodiment)

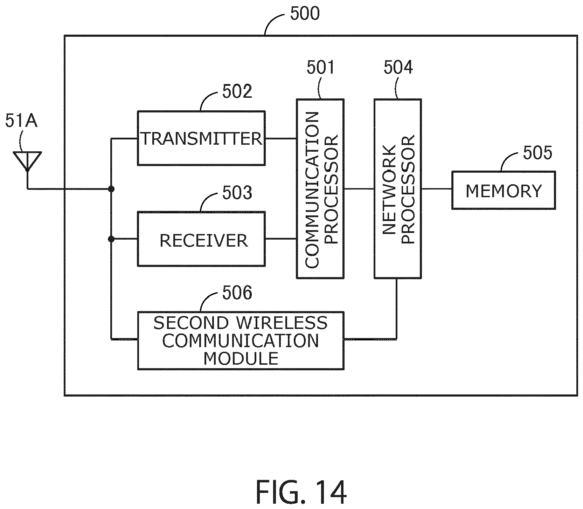

FIG. 14 is a functional block diagram of the terminal (STA) 500 according to a sixth embodiment. The STA 500 includes a communication processor 501, a transmitter 502, a receiver 503, an antenna 51A, an application processor 504 a memory505, and a second wireless communication module506. The base station (AP) may have the similar configuration.

The communication processor 501 has the functions similar to MAC/PHY manager as described in the first embodiment. The transmitter 502 and the receiver 503 have the functions similar to PHY processor and MAC processor as described in the first embodiment. The transmitter 502 and the receiver 503 may perform analog domain processing in PHY processor and the communication processor 501 may perform digital domain processing in MAC processor and digital domain processing in PHY processor. The communication processor 501 may internally possess a buffer for transferring data to and from the application processor 504. The buffer may be a volatile memory, such as an SRAM or a DRAM, or may be a non-volatile memory, such as a NAND or an MRAM.

The application processor 504 performs wireless communication through the communication processor 501, data writing or reading with the memory 505 and wireless communication through the second wireless communication module 506. The application processor 504 performs various processing such as Web browsing or multimedia processing of video or music or the like. The operation of application processor 504 may be carried out by software (program) processing by a processor such as CPU, by hardware, or both of them.

The memory 505 saves data received at the receiver 503 or the second wireless communication module 506, or data processed by the application processor 504. The memory 505 may be a volatile memory such as a DRAM or may be a non-volatile memory, such as a NAND or an MRAM. The memory 505 may be an SSD, an HDD, an SD card, or an eMMC or the like. The memory 505 may be arranged out of the access point 500.

The second wireless communication module 506 has the similar configuration to the WLAN module as shown in FIG. 12 or FIG. 13 as one example. The second wireless communication module 506 performs wireless communication in a different manner than that realized by the communication processor 501, the transmitter 502 and the receiver 503. For example, in a case that the communication processor 501, the transmitter 502 and the receiver 503 perform wireless communication in compliance with IEEE802.11 standard, the second wireless communication module 506 may perform wireless communication in compliance with another wireless communication standard such as Bluetooth (trademark), LTE, Wireless HD or the like. The communication processor 501, the transmitter 502, the receiver 503 may perform wireless communication at 2.4GHz/5GHz and the second wireless communication module 506 may perform wireless communication at 60GHz.

In the embodiment, one antenna is arranged and shared by the transmitter 502, the receiver 503 and the second wireless communication module 506. A switch controlling for connection destination of the antenna 51A may be arranged and thereby the antenna may be shared. A plurality of antennas may be arranged and may be employed by the transmitter 502, the receiver 503, and the second wireless communication module 506, respectively.

As one example, the communication processor 501 corresponds to an integrated circuit, and the transmitter 502 and the receiver 503 corresponds to an RF integrated circuit which transmits and receives frames. A set of the communication processor 501 and the application processor 504 is configured by one integrated circuit (1 chip). A part of the second wireless communication module 506 and the application processor 504 may be configured by one integrated circuit (1 chip).

The application processor performs control of wireless communication through the communication processor 501 and wireless communication through the second wireless communication module 506.

### (Seventh Embodiment)

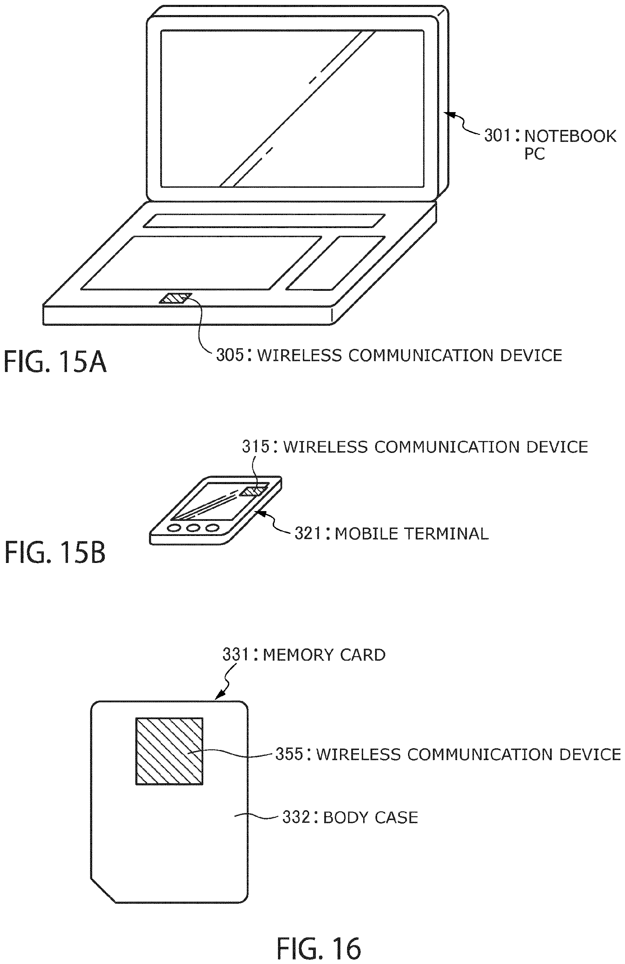

FIG. 15A and FIG. 15B are perspective views of wireless terminal according to the present embodiment. The wireless terminal in FIG. 15A is a notebook PC 301 and the wireless communication device (or a wireless device) in FIG. 15B is a mobile terminal 321. Each of them corresponds to one form of a terminal (which may indicate a base station). The notebook PC 301 and the mobile terminal 321 are equipped with wireless communication devices 305 and 315, respectively. The wireless communication device provided in a terminal (which may indicate a base station) which has been described above can be used as the wireless communication devices 305 and 315. A wireless terminal carrying a wireless communication device is not limited to notebook PCs and mobile terminals. For example, it can be installed in a TV, a digital camera, a wearable device, a tablet, a smart phone, a gaming device, a network storage device, a monitor, a digital audio player, a web camera, a video camera, a projector, a navigation system, an external adapter, an internal adapter, a set top box, a gateway, a printer server, a mobile access point, a router, an enterprise/service provider access point, a portable device, a handheld device, a vehicle and so on.

Moreover, a wireless communication device installed in a terminal (which may indicate a base station) can also be provided in a memory card. FIG. 16 illustrates an example of a wireless communication device mounted on a memory card. A memory card 331 contains a wireless communication device 355 and a body case 332. The memory card 331 uses the wireless communication device 355 for wireless communication with external devices. Here, in FIG. 16, the description of other installed elements (for example, a memory, and so on) in the memory card 331 is omitted.

### (Eighth Embodiment)

In the present embodiment, a bus, a processor unit and an external interface unit are provided in addition to the configuration of the wireless communication device (the wireless communication device of the terminal (which may indicate the base station)) according to any of the above embodiments. The processor unit and the external interface unit are connected with an external memory (a buffer) through the bus. A firmware operates the processor unit. Thus, by adopting a configuration in which the firmware is included in the wireless communication device, the functions of the wireless communication device can be easily changed by rewriting the firmware. The processing unit in which the firmware operates may be a processor that performs the process of the communication controlling device or the control unit according to the present embodiment, or may be another processor that performs a process relating to extending or altering the functions of the process of the communication controlling device or the control unit. The processing unit in which the firmware operates may be included in the access point or the wireless terminal according to the present embodiment. Alternatively, the processing unit may be included in the integrated circuit of the wireless communication device installed in the access point, or in the integrated circuit of the wireless communication device installed in the wireless terminal.

### (Ninth Embodiment)

In the present embodiment, a clock generating unit is provided in addition to the configuration of the wireless communication device (the wireless communication device of the terminal (which may indicate the base station)) according to any of the above embodiments. The clock generating unit generates a clock and outputs the clock from an output terminal to the exterior of the wireless communication device. Thus, by outputting to the exterior the clock generated inside the wireless communication device and operating the host by the clock output to the exterior, it is possible to operate the host and the wireless communication device in a synchronized manner.

### (Tenth Embodiment)

In the present embodiment, a power source unit, a power source controlling unit and a wireless power feeding unit are included in addition to the configuration of the wireless communication device (the wireless communication device of the terminal (which may indicate the base station)) according to any of the above embodiments. The power supply controlling unit is connected to the power source unit and to the wireless power feeding unit, and performs control to select a power source to be supplied to the wireless communication device. Thus, by adopting a configuration in which the power source is included in the wireless communication device, power consumption reduction operations that control the power source are possible.

### (Eleventh Embodiment)

In the present embodiment, a SIM card is added to the configuration of the wireless communication device according to any of the above embodiments. For example, the SIM card is connected with the controller, the transmitter, the receiver or plural of them in the wireless communication device. Thus, by adopting a configuration in which the SIM card is included in the wireless communication device, authentication processing can be easily performed.

### (Twelfth Embodiment)

In the eighth embodiment, a video image compressing/decompressing unit is added to the configuration of the wireless communication device according to any of the above embodiments. The video image compressing/decompressing unit is connected to the bus. Thus, by adopting a configuration in which the video image compressing/decompressing unit is included in the wireless communication device, transmitting a compressed video image and decompressing a received compressed video image can be easily done.

### (Thirteenth Embodiment)

In the present embodiment, an LED unit is added to the configuration of the wireless communication device (the wireless communication device of the terminal (which may indicate the base station)) according to any of the above embodiments. For example, the LED unit is connected to the controller, the transmitter, the receiver or plural of them in the wireless communication device. Thus, by adopting a configuration in which the LED unit is included in the wireless communication device, notifying the operation state of the wireless communication device to the user can be easily done.

### (Fourteenth Embodiment)

In the present embodiment, a vibrator unit is included in addition to the configuration of the wireless communication device wireless communication device (the wireless communication device of the terminal (which may indicate the base station)) according to any of the above embodiments. For example, the vibrator unit is connected to at least one of the controller, the transmitter, the receiver or plural of them in the wireless communication device. Thus, by adopting a configuration in which the vibrator unit is included in the wireless communication device, notifying the operation state of the wireless communication device to the user can be easily done.

### (Fifteenth embodiment)

In the present embodiment, the configuration of the wireless communication device includes a display in addition to the configuration of the wireless communication device (the wireless communication device of the terminal (which may indicate the base station)) according to any one of the above embodiments. The display may be connected to the controller, the transmitter, the receiver or plural of them in the wireless communication device via a bus (not shown). As seen from the above, the configuration including the display to display the operation state of the wireless communication device on the display allows the operation status of the wireless communication device to be easily notified to a user.

### (Sixteenth Embodiment)

In the present embodiment, [1] the frame type in the wireless communication system, [2] a technique of disconnection between wireless communication devices, [3] an access scheme of a wireless LAN system and [4] a frame interval of a wireless LAN are described.

### [1] Frame type in communication system

Generally, as mentioned above, frames treated on a wireless access protocol in a wireless communication system are roughly divided into three types of the data frame, the management frame and the control frame. These types are normally shown in a header part which is commonly provided to frames. As a display method of the frame type, three types may be distinguished in one field or may be distinguished by a combination of two fields. In IEEE 802.11 standard, identification of a frame type is made based on two fields of Type and Subtype in the Frame Control field in the header part of the MAC frame. The Type field is one for generally classifying frames into a data frame, a management frame, or a control frame and the Subtype field is one for identifying more detailed type in each of the classified frame types such as a beacon frame belonging to the management frame.

The management frame is a frame used to manage a physical communication link with a different wireless communication device. For example, there are a frame used to perform communication setting with the different wireless communication device or a frame to release communication link (that is, to disconnect the connection), and a frame related to the power save operation in the wireless communication device.

The data frame is a frame to transmit data generated in the wireless communication device to the different wireless communication device after a physical communication link with the different wireless communication device is established. The data is generated in a higher layer of the present embodiment and generated by, for example, a user's operation.

The control frame is a frame used to perform control at the time of transmission and reception (exchange) of the data frame with the different wireless communication device. A response frame transmitted for the acknowledgment in a case where the wireless communication device receives the data frame or the management frame, belongs to the control frame. The response frame is, for example, an ACK frame or a BlockACK frame. The RTS frame and the CTS frame are also the control frame.

These three types of frames are subjected to processing based on the necessity in the physical layer and then transmitted as physical packets via an antenna. In IEEE 802.11 standard (including the extended standard such as IEEE Std 802.11ac-2013), an association process is defined as one procedure for connection establishment. The association request frame and the association response frame which are used in the procedure are a management frame. Since the association request frame and the association response frame is the management frame transmitted in a unicast scheme, the frames causes the wireless communication terminal in the receiving side to transmit an ACK frame being a response frame. The ACK frame is a control frame as described in the above.

### [2] Technique of disconnection between wireless communication devices

For disconnection of the connection (release), there are an explicit technique and an implicit technique. As the explicit technique, a frame to disconnect any one of the connected wireless communication devices is transmitted. This frame corresponds to Deauthentication frame defined in IEEE 802.11 standard and is classified into the management frame. Normally, it is determined that the connection is disconnected at the timing of transmitting the frame to disconnect the connection in a wireless communication device on the side to transmit the frame and at the timing of receiving the frame to disconnect the connection in a wireless communication device on the side to receive the frame. Afterward, it returns to the initial state in a communication phase, for example, a state to search for a wireless communication device of the communicating partner. In a case that the wireless communication base station disconnects with a wireless communication terminal, for example, the base station deletes information on the wireless communication device from a connection management table if the base station holds the connection management table for managing wireless communication terminals which entries into the BSS of the base station-self. For example, in a case that the base station assigns an AID to each wireless communication terminal which entries into the BSS at the time when the base station permitted each wireless communication terminal to connect to the base station-self in the association process, the base station deletes the held information related to the AID of the wireless communication terminal disconnected with the base station and may release the AID to assign it to another wireless communication device which newly entries into the BSS.

On the other hand, as the implicit technique, it is determined that the connection state is disconnected in a case where frame transmission (transmission of a data frame and management frame or transmission of a response frame with respect to a frame transmitted by the subject device) is not detected from a wireless communication device of the connection partner which has established the connection for a certain period. Such a technique is provided because, in a state where it is determined that the connection is disconnected as mentioned above, a state is considered where the physical wireless link cannot be secured, for example, the communication distance to the wireless communication device of the connection destination is separated and the radio signals cannot be received or decoded. That is, it is because the reception of the frame to disconnect the connection cannot be expected.

As a specific example to determine the disconnection of connection in an implicit method, a timer is used. For example, at the time of transmitting a data frame that requests an acknowledgment response frame, a first timer (for example, a retransmission timer for a data frame) that limits the retransmission period of the frame is activated, and, if the acknowledgement response frame to the frame is not received until the expiration of the first timer (that is, until a desired retransmission period passes), retransmission is performed. When the acknowledgment response frame to the frame is received, the first timer is stopped.

On the other hand, when the acknowledgment response frame is not received and the first timer expires, for example, a management frame to confirm whether a wireless communication device of a connection partner is still present (in a communication range) (in other words, whether a wireless link is secured) is transmitted, and, at the same time, a second timer (for example, a retransmission timer for the management frame) to limit the retransmission period of the frame is activated. Similarly to the first timer, even in the second timer, retransmission is performed if an acknowledgment response frame to the frame is not received until the second timer expires, and it is determined that the connection is disconnected when the second timer expires.

Alternatively, a third timer is activated when a frame is received from a wireless communication device of the connection partner, the third timer is stopped every time the frame is newly received from the wireless communication device of the connection partner, and it is activated from the initial value again. When the third timer expires, similarly to the above, a management frame to confirm whether the wireless communication device of the connection party is still present (in a communication range) (in other words, whether a wireless link is secured) is transmitted, and, at the same time, a second timer (for example, a retransmission timer for the management frame) to limit the retransmission period of the frame is activated. Even in this case, retransmission is performed if an acknowledgment response frame to the frame is not received until the second timer expires, and it is determined that the connection is disconnected when the second timer expires. The latter management frame to confirm whether the wireless communication device of the connection partner is still present may differ from the management frame in the former case. Moreover, regarding the timer to limit the retransmission of the management frame in the latter case, although the same one as that in the former case is used as the second timer, a different timer may be used.

### [3] Access scheme of wireless LAN system

For example, there is a wireless LAN system with an assumption of communication or competition with a plurality of wireless communication devices. CSMA/CA is set as the basis of an access scheme in IEEE802.11 (including an extension standard or the like) wireless LAN. In a scheme in which transmission by a certain wireless communication device is grasped and transmission is performed after a fixed time from the transmission end, simultaneous transmission is performed in the plurality of wireless communication devices that grasp the transmission by the wireless communication device, and, as a result, radio signals collide and frame transmission fails. By grasping the transmission by the certain wireless communication device and waiting for a random time from the transmission end, transmission by the plurality of wireless communication devices that grasp the transmission by the wireless communication device stochastically disperses. Therefore, if the number of wireless communication devices in which the earliest time in a random time is subtracted is one, frame transmission by the wireless communication device succeeds and it is possible to prevent frame collision. Since the acquisition of the transmission right based on the random value becomes impartial between the plurality of wireless communication devices, it can say that a scheme adopting Collision Avoidance is a suitable scheme to share a radio medium between the plurality of wireless communication devices.

### [4] Frame interval of wireless LAN

The frame interval of IEEE802.11 wireless LAN is described. There are several types of frame intervals used in IEEE802.11 wireless LAN, such as distributed coordination function interframe space (DIFS), arbitration interframe space (AIFS), point coordination function interframe space (PIFS), short interframe space (SIFS), extended interframe space (EIFS) and reduced interframe space (RIFS).

The definition of the frame interval is defined as a continuous period that should confirm and open the carrier sensing idle before transmission in IEEE802.11 wireless LAN, and a strict period from a previous frame is not discussed. Therefore, the definition is followed in the explanation of IEEE802.11 wireless LAN system. In IEEE802.11 wireless LAN, a waiting time at the time of random access based on CSMA/CA is assumed to be the sum of a fixed time and a random time, and it can say that such a definition is made to clarify the fixed time.

DIFS and AIFS are frame intervals used when trying the frame exchange start in a contention period that competes with other wireless communication devices on the basis of CSMA/CA. DIFS is used in a case where priority according to the traffic type is not distinguished, AIFS is used in a case where priority by traffic identifier (TID) is provided.

Since operation is similar between DIFS and AIFS, an explanation below will mainly use AIFS. In IEEE802.11 wireless LAN, access control including the start of frame exchange in the MAC layer is performed. In addition, in a case where QoS (Quality of Service) is supported when data is transferred from a higher layer, the traffic type is notified together with the data, and the data is classified for the priority at the time of access on the basis of the traffic type. The class at the time of this access is referred to as "access category (AC)". Therefore, the value of AIFS is provided every access category.

PIFS denotes a frame interval to enable access which is more preferential than other competing wireless communication devices, and the period is shorter than the values of DIFS and AIFS. SIFS denotes a frame interval which can be used in a case where frame exchange continues in a burst manner at the time of transmission of a control frame of a response system or after the access right is acquired once. EIFS denotes a frame interval caused when frame reception fails (when the received frame is determined to be error).

RIFS denotes a frame interval which can be used in a case where a plurality of frames are consecutively transmitted to the same wireless communication device in a burst manner after the access right is acquired once, and a response frame from a wireless communication device of the transmission partner is not requested while RIFS is used.

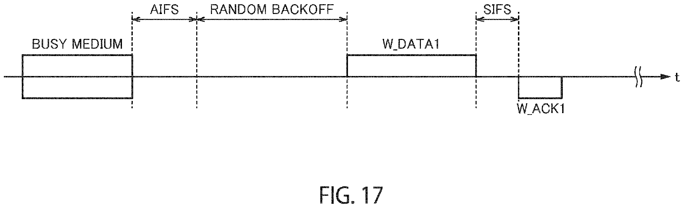

Here, FIG. 17 illustrates one example of frame exchange in a competitive period based on the random access in IEEE802.11 wireless LAN.

When a transmission request of a data frame (W_DATA1) is generated in a certain wireless communication device, a case is assumed where it is recognized that a medium is busy (busy medium) as a result of carrier sensing. In this case, AIFS of a fixed time is set from the time point at which the carrier sensing becomes idle, and, when a random time (random backoff) is set afterward, data frame W_DATA1 is transmitted to the communicating partner.

The random time is acquired by multiplying a slot time by a pseudorandom integer led from uniform distribution between contention windows (CW) given by integers from 0. Here, what multiplies CW by the slot time is referred to as "CW time width". The initial value of CW is given by CWmin, and the value of CW is increased up to CWmax every retransmission. Similarly to AIFS, both CWmin and CWmax have values every access category. In a wireless communication device of transmission destination of W_DATA1, when reception of the data frame succeeds, a response frame (W_ACK1) is transmitted after SIFS from the reception end time point. If it is within a transmission burst time limit when W_ACK1 is received, the wireless communication device that transmits W_DATA1 can transmit the next frame (for example, W_DATA2) after SIFS.

Although AIFS, DIFS, PIFS and EIFS are functions between SIFS and the slot-time, SIFS and the slot time are defined every physical layer. Moreover, although parameters whose values being set according to each access category, such as AIFS, CWmin and CWmax, can be set independently by a communication group (which is a basic service set (BSS) in IEEE802.11 wireless LAN), the default values are defined.

For example, in the definition of 802.11ac, with an assumption that SIFS is 16 µs and the slot time is 9 µs, and thereby PIFS is 25 µs, DIFS is 34 µs, the default value of the frame interval of an access category of BACKGROUND (AC_BK) in AIFS is 79 µs, the default value of the frame interval of BEST EFFORT (AC_BE) is 43 µs, the default value of the frame interval between VIDEO(AC_VI) and VOICE(AC_VO) is 34 µs, and the default values of CWmin and CWmax are 31 and 1023 in AC_BK and AC_BE, 15 and 31 in AC_VI and 7 and 15 in AC_VO. Here, EIFS denotes the sum of SIFS, DIFS, and the time length of a response frame transmitted at the lowest mandatory physical rate. In the wireless communication device which can effectively takes EIFS, it may estimate an occupation time length of a PHY packet conveying a response frame directed to a PHY packet due to which the EIFS is caused and calculates a sum of SIFS, DIFS and the estimated time to take the EIFS.

Note that the frames described in the embodiments may indicate not only things called frames in, for example, IEEE 802.11 standard, but also things called packets, such as Null Data Packets.

The terms used in each embodiment should be interpreted broadly. For example, the term "processor" may encompass a general purpose processor, a central processing unit (CPU), a microprocessor, a digital signal processor (DSP), a controller, a microcontroller, a state machine, and so on. According to circumstances, a "processor" may refer to an application specific integrated circuit (ASIC), a field programmable gate array (FPGA), and a programmable logic device (PLD), etc. The term "processor" may refer to a combination of processing devices such as a plurality of microprocessors, a combination of a DSP and a microprocessor, or one or more microprocessors in conjunction with a DSP core.

As another example, the term "memory" may encompass any electronic component which can store electronic information. The "memory" may refer to various types of media such as a random access memory (RAM), a read-only memory (ROM), a programmable read-only memory (PROM), an erasable programmable read only memory (EPROM), an electrically erasable PROM (EEPROM), a non-volatile random access memory (NVRAM), a flash memory, and a magnetic or optical data storage, which are readable by a processor. It can be said that the memory electronically communicates with a processor if the processor read and/or write information for the memory. The memory may be arranged within a processor and also in this case, it can be said that the memory electronically communication with the processor. The circuitry" may refer one or more electric circuits disposed on a single chip, or may refer one or more electric circuits disposed on a plurality of chips or a plurality of devices in a dispersed manner.

In the specification, the expression "at least one of a, b or c" is an expression to encompass not only "a", "b", "c", "a and b", "a and c", "b and c", "a, b and c" or any combination thereof but also a combination of at least a plurality of same elements such as "a and a", "a, b and b" or "a, a, b, b, c and c". Also, the expression is an expression to allow a set including an element other than "a", "b" and "c" such as "a, b, c, and d".

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions.

### [Clauses]

1. A wireless communication device comprising:
   a receiver configured to receive a first request from at least a part of a plurality of first wireless communication devices;
   controlling circuitry configured to select two or more first wireless communication devices from the first wireless communication devices each transmitting the first request; and
   a transmitter configured to transmit a first frame to instruct the selected first wireless communication devices to perform multiplexing transmission.
2. The wireless communication device according to clause 1, wherein the controlling circuitry is configured to select the first wireless communication devices on the basis of characteristic information of sensors equipped in the first wireless communication devices transmitting the first request.
3. The wireless communication device according to clause 2, wherein the characteristic information of the sensor includes at least one of a type of the sensor, a type or purpose of data detected by the sensor, and a position or direction in which the sensor is provided.
4. The wireless communication device according to any one of clauses 1 to 3, wherein the controlling circuitry is configured to select, of the first wireless communication devices each transmitting the first request, the first wireless communication devices of which the characteristic information has a predetermined relationship.
5. The wireless communication device according to any one of clauses 1 to 4, wherein the controlling circuitry configured to select the first wireless communication devices closest in frame sizes for the multiplexing transmission such that a multiplexing number of the selected first wireless communication devices is equal to or less than a maximum multiplexing number for the multiplexing transmission.
6. The wireless communication device according to any one of clauses 1 to 5, wherein the controlling circuitry configured to select the first wireless communication devices closest in numbers of subframes aggregated in frames to be transmitted by the multiplexing transmission such that a multiplexing number of the selected first wireless communication devices is equal to or less than a maximum multiplexing number for the multiplexing transmission.
7. The wireless communication device according to any one of clauses 1 to 6, wherein the receiver is configured to receive a second request from one of the selected first wireless communication devices, and
   the transmitter is configured to transmit the first frame when the second request is received.
8. The wireless communication device according to any one of clauses 1 to 7, wherein the receiver is configured to receive a plurality of second frames transmitted by multiplexing transmission from the selected first wireless communication devices in response to the first frame.
9. The wireless communication device according to any one of clauses 1 to 8, wherein the controlling circuitry is configured to control such that at least one of a minimum value and a maximum value of a contention window for each of the plurality of first wireless communication devices is larger than at least one of a minimum value and a maximum value of a contention window for the wireless communication device.
10. The wireless communication device according to any one of clauses 1 to 9, wherein the controlling circuitry is configured to control such that a length of a fixed time of a carrier sense which is performed by the wireless communication device before a backoff is shorter than a length of a fixed time of a carrier sense which is performed by each of the plurality of first wireless communication devices.
11. The wireless communication device according to any one of clauses 1 to 10, wherein the controlling circuitry is configured to carry out a first mode to accept an initial connection to the wireless communication device at a time when the wireless communication device starts up,
   the transmitter is configured to transmit information representing that the first mode is being carried out, and
   the controlling circuitry is configured to wait for a request for the initial connection from each of the first wireless communication devices during a period of time of carrying out the first mode.
12. The wireless communication device according to any one of clauses 1 to 11, further comprising at least one antenna.
13. A wireless communication device comprising:
   controlling circuitry configured to select two or more first wireless communication devices on the basis of characteristic information of sensors equipped in a plurality of first wireless communication devices; and
   a transmitter configured to transmit a first frame to instruct the selected first wireless communication devices to perform multiplexing transmission.
14. The wireless communication device according to clause 13, further comprising at least one antenna.
15. A wireless communication method comprising:
   receiving a first request from at least a part of a plurality of first wireless communication devices;
   selecting two or more first wireless communication devices from the first wireless communication devices each transmitting the first request; and
   transmitting a first frame to instruct the selected first wireless communication devices to perform multiplexing transmission.
16. The wireless communication method according to clause 15, comprising: selecting the first wireless communication devices on the basis of characteristic information of sensors equipped in the first wireless communication devices transmitting the first request.
17. The wireless communication method according to clause 16, wherein the characteristic information of the sensor includes at least one of a type of the sensor, a type or purpose of data detected by the sensor, and a position or direction in which the sensor is provided.
18. The wireless communication method according to clause 15, comprising selecting, of the first wireless communication devices each transmitting the first request, the first wireless communication devices of which the characteristic information has a predetermined relationship.
19. The wireless communication method according to clause 15, comprising selecting the first wireless communication devices closest in frame sizes for the multiplexing transmission such that a multiplexing number of the selected first wireless communication devices is equal to or less than a maximum multiplexing number for the multiplexing transmission.
20. The wireless communication method according to clause 15, selecting the first wireless communication devices closest in numbers of subframes aggregated in frames to be transmitted by the multiplexing transmission such that a multiplexing number of the selected first wireless communication devices is equal to or less than a maximum multiplexing number for the multiplexing transmission.

## Claims

1. A wireless communication device comprising:
a receiver (103) configured to receive a first request from at least a part of a plurality of first wireless communication devices;
controlling circuitry (101) configured to select two or more first wireless communication devices from the first wireless communication devices each transmitting the first request; and
a transmitter (102) configured to transmit a first frame to instruct the selected first wireless communication devices to perform multiplexing transmission.

2. The wireless communication device according to claim 1, wherein the controlling circuitry (101) is configured to select the first wireless communication devices on the basis of characteristic information of sensors equipped in the first wireless communication devices transmitting the first request.

3. The wireless communication device according to claim 2, wherein the characteristic information of the sensor includes at least one of a type of the sensor, a type or purpose of data detected by the sensor, and a position or direction in which the sensor is provided.

4. The wireless communication device according to any one of claims 1 to 3, wherein the controlling circuitry (101) is configured to select, of the first wireless communication devices each transmitting the first request, the first wireless communication devices of which the characteristic information has a predetermined relationship.

5. The wireless communication device according to any one of claims 1 to 4, wherein the controlling circuitry (101) configured to select the first wireless communication devices closest in frame sizes for the multiplexing transmission such that a multiplexing number of the selected first wireless communication devices is equal to or less than a maximum multiplexing number for the multiplexing transmission.

6. The wireless communication device according to any one of claims 1 to 5, wherein the controlling circuitry (101) configured to select the first wireless communication devices closest in numbers of subframes aggregated in frames to be transmitted by the multiplexing transmission such that a multiplexing number of the selected first wireless communication devices is equal to or less than a maximum multiplexing number for the multiplexing transmission.

7. The wireless communication device according to any one of claims 1 to 6, wherein the receiver (103) is configured to receive a second request from one of the selected first wireless communication devices, and
the transmitter (102) is configured to transmit the first frame when the second request is received.

8. The wireless communication device according to any one of claims 1 to 7, wherein the receiver (103) is configured to receive a plurality of second frames transmitted by multiplexing transmission from the selected first wireless communication devices in response to the first frame.

9. The wireless communication device according to any one of claims 1 to 8, wherein the controlling circuitry (101) is configured to control such that at least one of a minimum value and a maximum value of a contention window for each of the plurality of first wireless communication devices is larger than at least one of a minimum value and a maximum value of a contention window for the wireless communication device.

10. The wireless communication device according to any one of claims 1 to 9, wherein the controlling circuitry (101) is configured to control such that a length of a fixed time of a carrier sense which is performed by the wireless communication device before a backoff is shorter than a length of a fixed time of a carrier sense which is performed by each of the plurality of first wireless communication devices.

11. The wireless communication device according to any one of claims 1 to 10, wherein the controlling circuitry (101) is configured to carry out a first mode to accept an initial connection to the wireless communication device at a time when the wireless communication device starts up,
the transmitter (102) is configured to transmit information representing that the first mode is being carried out, and
the controlling circuitry (101) is configured to wait for a request for the initial connection from each of the first wireless communication devices during a period of time of carrying out the first mode.

12. The wireless communication device according to any one of claims 1 to 11, further comprising at least one antenna (100) .

13. A wireless communication device comprising:
controlling circuitry (101) configured to select two or more first wireless communication devices on the basis of characteristic information of sensors equipped in a plurality of first wireless communication devices; and
a transmitter (102) configured to transmit a first frame to instruct the selected first wireless communication devices to perform multiplexing transmission.

14. The wireless communication device according to claim 13, further comprising at least one antenna (100).

15. A wireless communication method comprising:
receiving a first request from at least a part of a plurality of first wireless communication devices;
selecting two or more first wireless communication devices from the first wireless communication devices each transmitting the first request; and
transmitting a first frame to instruct the selected first wireless communication devices to perform multiplexing transmission.
